# EUROPÄISCHE PATENTSCHRIFT

(11) **EP 0 543 069 B1**
(45) Veröffentlichungstag und Bekanntmachung des Hinweises auf die Patenterteilung: **31.07.1996**
(21) Anmeldenummer: 91810903.4
(22) Anmeldetag: 20.11.1991
(51) Int. Cl.: G03B 27/46, G03B 27/58

(54) **Fotografisches Kopiergerät und Betriebsverfahren**
Photographic printer and method of operation
Imprimante photographique et méthode de fonctionnement

(43) Veröffentlichungstag der Anmeldung: 26.05.1993
(73) Patentinhaber: GRETAG IMAGING AG, CH-8105 Regensdorf (CH)
(72) Erfinder: Haller, Heinrich, CH-8247 Flurlingen (CH)
(74) Vertreter: Kleewein, Walter, Dr.

(56) Entgegenhaltungen:
- AT-A- 335 844
- DE-A- 3 538 082
- DE-A- 3 737 788
- DE-A- 3 744 002
- US-A- 4 269 370

## Beschreibung

Die Erfindung betrifft ein fotografisches Kopiergerät gemäss Oberbegriff des Patentanspruchs 1. Weiters betrifft die Erfindung auch ein Verfahren zum Betreiben eines derartigen fotografischen Kopiergerätes gemäss Oberbegriff des Patentanspruchs 19.

In professionellen Fotolabors werden heutzutage fotografische Kopien - Papierbilder - von fotografischen Kopiervorlagen - z.B. belichteten und entwickelten Negativenüblicherweise mit Hilfe von weitgehend vollautomatisch funktionierenden fotografischen Kopiergeräten - sogenannten fotografischen Printern - hergestellt. Das Bedienungspersonal hat bei derartigen Geräten im wesentlichen überwachende Funktionen, kontrolliert den Belichtungsvorgang und sorgt für einen möglichst kontinuierlichen Arbeitsablauf. Zu diesem Zweck kümmert sich das Bedienungspersonal um das Kopiermaterial - z.B. unbelichtetes und belichtetes Fotopapier - und muss insbesondere dafür sorgen, dass immer genügend Vorlagenmaterial - belichteter und entwickelter Negativfilm - für die Weiterbearbeitung bereitsteht und andererseits, dass bereits bearbeiteter Negativfilm wieder rechtzeitig von dem Kopiergerät entnommen wird, um unnötige Standzeiten des fotografischen Kopiergerätes zu vermeiden. Bei den modernen fotografischen Kopiergeräten sind die weiterzubearbeitenden Negativfilme üblicherweise zu langen Negativfilmstreifen zusammengespleisst und auf Vorratsspulen aufgewickelt, die eingangsseitig dem fotografischen Kopiergerät zugeführt werden.

Der Negativfilmstreifen wird eingangsseitig des Kopiergerätes in die Filmtransportbahn eingefädelt und automatisch durch das Kopiergerät transportiert. Nach dem Passieren der Weiterbearbeitungsstation, beispielsweise der Belichtungsstation, in der die Negative auf unbelichtetes Fotopapier aufbelichtet werden, wird der Negativfilmstreifen wieder auf eine ausgangsseitig des Kopiergerätes angeordnete Aufwickelspule aufgewickelt. Wenn das Hinterende des Negativfilmstreifens die Vorratsspule verlässt, muss das Bedienungspersonal die leere Vorratsspule durch eine volle ersetzen. In der Zwischenzeit passiert das Hinterende aber auch die Bearbeitungsstation und wird aus der Filmtransportbahn herausgezogen und auf die Aufwickelspule aufgewickelt. Das Bedienungspersonal muss daher auch dafür sorgen, dass die nunmehr volle Aufwickelspule schnellstmöglich gegen eine neue leere ausgetauscht wird.

Der Stillstand des Kopiergerätes ist also im wesentlichen nur von der Reaktionszeit und Manipulationszeit des Bedienungspersonals abhängig. Das Bedienungspersonal muss daher genau im richtigen Augenblick bereit stehen, da ansonsten das Kopiergerät unnötig lange stillsteht. Da heute in der Regel das Bedienungspersonal gleichzeitig mehrere Kopiergeräte bedient, ist diesbezüglich ein exaktes timing erforderlich, welches wiederum sehr grosse Aufmerksamkeit seitens des Bedienungspersonals erfordert, insbesondere muss es den Füllstand der ein- und ausgangsseitigen Filmspulen genau überwachen. Für die übrigen Aufgaben, so z.B. den Papierkassettenwechsel bleibt kaum mehr Zeit. Insbesondere beim Übergang auf fotografische Kopiergeräte auf einer Stundenleistung von 15.000 und mehr Bildern sind all diese Aufgaben oft fast nicht mehr zu bewältigen, da beispielsweise allein der Wechsel der Filmspulen eingangsseitig schon länger dauern kann als der Durchlauf des restlichen Negativfilmstreifens durch das Kopiergerät.

Um diesem Umstand abzuhelfen, wird in der US-A-4,919,354 (entspricht der DE-A-37 37 788) vorgeschlagen, eingangs- wie ausgangsseitig des Kopiergerätes je zwei Filmspulenzwei Vorratsspulen und zwei Aufwickelspulen - vorzusehen, die auf spiegelbildlich zur Filmtransportebene übereinander angeordnete Aufsteckdorne aufsteckbar sind. Eingangsseitig ist jeder der beiden Vorratsspulen eine eigene Zuführ- und Einfädelvorrichtung zugeordnet. Jede der Zuführ- und Einfädelvorrichtungen umfasst ein Rollenpaar, bestehend aus einer gerätefesten Gegendruckrolle und aus einer Vorschubrolle. Zwischen den Gegendruckrollen ist eine keilförmige Weiche vorgesehen. An dem den Gegendruckrollen gegenüberliegenden Ende der Weiche ist eine Wippe schwenkbar gelagert, die die gegenläufig antreibbaren Vorschubrollen trägt, von denen jeweils eine in jeder Endstellung der Wippe an der zugehörigen Gegenrolle anliegt. Während beispielsweise der Negativfilmstreifen von der unteren Vorratsrolle abgewickelt wird, kann eine weitere Vorratsrolle auf die zweite Achse aufgesteckt werden. Das Vorderende des Negativfilmstreifens wird händisch zwischen die Weiche und die zugehörige Gegendruckrolle geführt. Durch Betätigen der Wippe wird die zugehörige Vorschubrolle gegen die Gegendruckrolle geschwenkt und das Filmvorderende eingeklemmt. Der Negativfilmstreifen wird zur Gänze von der unteren Vorratsspule abgewickelt und auf die Aufwickelspule aufgewickelt. Erst dann wird die der oberen Vorratsspule zugeordnete Vorschubrolle aktiviert und der neue Negativfilmstreifen in die Filmtransportbahn eingefädelt. Während des Abwickelns des Negativfilmstreifens von der oberen Vorratsspule wird auf den unteren Aufsteckdorn in analoger Weise eine weitere

### Vorratsspule aufgesteckt u.s.f..

Ausgangsseitig sind gleichfalls zwei Aufwickelspulen für den Negativfilmstreifen vorgesehen, die etwa spiegelbildlich um die Filmtransportebene angeordnet, auf zwei Aufnahmedorne aufsteckbar sind. Jeder der beiden Aufwickelspulen, welche als spezielle Fangspulen ausgebildet sein müssen, ist ein schwenkbarer Fangarm für das Vorderende des Negativfilmstreifens zugeordnet. Diese Fangarme sind speziell ausgebildet und leiten das Filmvorderende der jeweiligen gewünschten Fangspule zu.

Während die vorgeschlagene Anordnung von zwei Vorratsspulen eingangsseitig und zwei Aufwickelspulen ausgangsseitig des Kopiergerätes es dem Bedienungspersonal zwar erlaubt, zu irgendeinem Zeitpunkt während des Abwickelns des Negativfilmstreifens von der gerade aktuellen Vorratsspule und des Aufwickelns des Negativfilmstreifens auf die gewünschte Aufwickelspule die leere zweite gegen eine neue volle Vorratsspule bzw. die zweite volle Aufwickelspule gegen eine neue leere zu tauschen, weist das vorgeschlagene Kopiergerät doch einige wesentliche verbesserungswürdige Nachteile auf. Auf der Eingangsseite sind für jede Vorratsspule eigene Einfädel- und Zuführvorrichtungen, jeweils eine Gegendruckrolle und eine Vorschubrolle umfassend, und eine Weiche erforderlich. Für den Antrieb jeder Vorschubrolle ist jeweils ein eigener Antriebsmotor vorzusehen. Das Umstellen der die beiden Vorschubrollen tragenden Wippe muss entweder von Hand erfolgen oder es müssen Stellelemente von Hand betätigt werden, die eine pneumatische Umstellvorrichtung in Gang setzen. Ausgangsseitig des Kopiergerätes ist der Aufbau ebenfalls sehr komplex. Für jede Aufwickelspule ist ein eigener schwenkbarer Fangarm für das Filmvorderende nötig. Für das Verschwenken der Fangarme sind wiederum eigene Antriebsmotoren und Steuereinrichtungen erforderlich. Der gesamte eingangsseitige und ausgangsseitige Aufbau des Kopiergerätes ist also relativ komplex und erfordert überdies grosse Aufmerksamkeit des Bedienungspersonals für zusätzliche Manipulationsschritte. Darüber hinaus muss das Bedienungspersonal immer darauf achten, immer die richtige Vorratsrolle bzw. Aufwickelrolle zu wechseln, einmal die obere, das andere mal wieder die untere u.s.f. Ein sehr grosser Nachteil besteht auch darin, dass nur spezielle, als Fangspulen ausgebildete Aufwickelspulen einsetzbar sind. Ein besonders wesentlicher Nachteil dieses Kopiergerätes des Standes der Technik besteht vor allem aber darin, dass der gerade bearbeitete Negativfilmstreifen immer zunächst vollständig aus der Filmtransportbahn herausgezogen werden muss, bevor ein neuer eingefädelt werden kann.

Die DE-A-37 44 002 beschreibt ein Verfahren sowie eine Vorrichtung zum automatischen Wechsel der aus einer Vielzahl von Einzelfilmen zusammengeklebten Filmstreifen in einem Rollenkopiergerät, bei dem jedoch ist. Filmanfang manuell in ein Weichenteil am Eingang des Filmtransportpfades einzufädeln ist. Auf der Aufwickelseite sind zwei vertikal übereinander angeordnete als Selbstfangspulen ausgebildete Aufwickelspulen mit automatischem Wechsel durch Drehung um 180° einer die beiden Aufwickelspulen tragenden drehbaren Scheibe vorgesehen.

Aufgabe der vorliegenden Erfindung ist es daher, all diese Nachteile der bekannten fotografischen Kopiergeräte zu beseitigen. Insbesondere soll ein fotografisches Kopiergerät geschaffen werden, welches einen weitgehend kontinuierlichen Betrieb bei hohen Kopierleistungen erlaubt und zugleich das Bedienungspersonal von zusätzlichen Ueberwachungsaufgaben entlastet. Die eingesetzten Filmspulen sollen universell verwendbar sein, insbesondere soll auf spezielle, als Fangspulen ausgebildete Aufwickelspulen verzichtet werden können.

All diese und noch weitere Aufgaben werden durch ein fotografisches Kopiergerät, welches die Merkmale des Patentanspruchs 1 aufweist, und durch ein Verfahren, welches die im Anspruch 19 angeführten Merkmale aufweist, gelöst Das erfindungsgemässe fotografische Kopiergerät zur Verarbeitung von zu langen Streifen zusammengeklebten Kopiervorlagen, in Form von Filmstreifen, die auf Filmspulen aufwickelbar sind, weist u.a. eine entlang einer Transportbahn des Negativfilmstreifens angeordnete Belichtungsstation auf, in der der Negativfilmstreifen Vorlage für Vorlage auf unbelichtetes fotografisches Kopiermaterial, insbesondere auf unbelichtetes Fotopapier, aufbelichtet wird, welches entlang eines innerhalb des Kopiergerätes verlaufenden Papierpfades vorzugsweise unterhalb der Filmtransportbahn durch die Belichtungsstation geführt wird. Das Kopiergerät ist mit zwei eingangsseitig des fotografischen Kopiergerätes angeordneten Vorratsspulen, von denen der Negativfilmstreifen wahlweise abwickelbar ist, sowie mit zwei ausgangsseitig des Kopiergerätes angeordneten Aufwickelspulen ausgestattet, auf die der Negativfilmstreifen nach dem Durchlauf durch das Kopiergerät wahlweise aufwickelbar ist, wobei jeweils eine Vorratsspule und eine Aufwickelspule mit dem gerade bearbeiteten Negativfilmstreifen verbunden sind und die jeweils anderen sich in Warteposition befinden. Die erfindungsgemässe Ausgestaltung des fotografischen Kopiergerätes besteht insbesondere darin, dass die in Arbeitsstellung mit dem gerade bearbeiteten Negativfilmstreifen verbundene Vorrats- bzw. Abwickelspule jeweils in etwa geradliniger Verlängerung der Filmtransportbahn unmittelbar benachbart dazu angeordnet ist, während die in Wartestellung befindlichen Filmspulen in etwa geradliniger Verlängerung der Filmtransportbahn hinter den in Arbeitsstellung befindlichen Filmspulen angeordnet sind.

Erfindungsgemäß sind die in Wartestellung befindlichen Vorrats- und Aufwickelspulen in die Arbeitsstellung bewegbar, wobei zugleich die zuvor in Arbeitstellung befindlichen Vorrats- und Aufwickelspulen in die Wartestellung bewegbar sind. Auf diese Weise ist für das Bedienungspersonal immer eindeutig ersichtlich, welches die gerade in Arbeitsstellung befindlichen Filmspulen sind.

Vorzugsweise sind die zwei Vorratsspulen und die zwei Aufwickelspulen jeweils auf einer abwickel- und aufwickelseitig an dem Kopiergerät vorgesehenen, motorisch antreibbaren Scheibe oder ähnlichem angeordnet, deren Drehachse etwa senkrecht zu der Filmtransportbahn angeordnet ist. Dabei ist es besonders vorteilhaft, wenn die Drehscheiben etwa vertikal und abwickel- und aufwickelseitig derart am Kopiergerät angebracht sind, dass die Drehachsen der Scheiben und beidseits der Drehachsen im selben Abstand dazu angeordnete Wickeldorne für die Filmspulen etwa in geradliniger Verlängerung und innerhalb der durch die Filmtransportbahn definierten Ebene angeordnet sind. Die Drehachsen der Scheiben und die Wickeldorne für die Filmspulen liegen also in derselben Ebene wie die Filmtransportbahn.

Besonders einfach sind die in Wartestellung befindlichen Filmspulen in die Arbeitsstellung zu bewegen und umgekehrt, wenn die die Filmspulen tragenden Scheiben oder ähnliches um wenigstens 180° um ihre Drehachse drehbar sind. Dabei erfolgt der Antrieb der Scheiben zweckmässigerweise über einen Schrittmotor und vorzugsweise im Uhrzeigersinn.

Erfindungsgemäß ist abwickelseitig des Kopiergerätes eine automatische Filmzuführvorrichtung zur Uebergabe des Filmvorderendes der in Wartestellung befindlichen Vorratsspule an ein eingangs der Filmtransportbahn vorgesehenes Filmeinzugsrollenpaar vorgesehen. In einer besonders bevorzugten Ausführungsvariante umfasst die Filmzuführvorrichtung einen Schwenkarm und eine am Vorderende des Schwenkarmes vorgesehen Filmklemme, in die das Filmvorderende einklemmbar ist, welche aus einer Ruhestellung in eine Uebergabestellung bewegbar sind, in der der Film an das Filmeinzugsrollenpaar übergeben wird.

Es ist vorteilhaft, wenn der Schwenkarm exzentrisch an einer motorisch antreibbaren Kurbelscheibe angelenkt ist, die etwa unterhalb des Filmeinzugsrollenpaars angeordnet ist, und dass das der Filmklemme gegenüberliegende Ende des Schwenkarms in einer Schlitzführung geführt ist.

In einer besonders bevorzugten Ausgestaltung des erfindungsgemässen fotografischen Kopiergerätes ist die untere Gegendruckrolle des Filmeinzugsrollenpaars geteilt ausgebildet, sodass der Schwenkarm mit der Filmklemme zwischen den geteilten Rollen durchführbar ist, wobei der Klemmspalt der Filmklemme etwa auf Höhe der Filmtransportbahn geführt ist. Beim Passieren des Filmeinzugsrollenpaars ist die Filmklemme automatisch lösbar, nachdem das Filmvorderende an das Filmeinzugsrollenpaar übergeben worden ist.

Besonders vorteilhaft ist es, wenn die Rotation der die Filmvorratsspulen tragenden abwickelseitigen Scheibe und die Bewegung des mit der Filmklemme für das Filmvorderende versehenen Schwenkarms derart gekoppelt ist, dass das Filmvorderende ohne Schlaufenbildung an das Filmeinzugsrollenpaar übergebbar ist. Auf diese Weise wird zuverlässig vermieden, dass die empfindliche Oberfläche des Negativfilmstreifens zerkratzt wird.

Eine deutliche Erleichterung für das Bedienungspersonal besteht darin, dass Mittel zur Ueberwachung des Füllgrades der in Arbeitsstellung befindlichen Vorratsspule vorgesehen sind, welche mit Steuereinrichtungen für die Antriebsmittel der die Vorratsspulen tragende Scheibe und der Filmzuführvorrichtung verbunden sind. Auf diese Weise kann der Positionswechsel der Vorratsspulen bequem automatisiert werden.

In einer weiteren ganz besonders bevorzugten Ausführungsvariante der Erfindung ist aufwickelseitig des Kopiergerätes eine automatisch betätigbare Filmeinfädeleinrichtung angeordnet, über welche das Filmvorderende von der Filmtransportbahn zu dem Wickelkern der in der Arbeitsstellung befindlichen Aufwickelspule leitbar ist. Vorzugsweise umfasst die Filmeinfädeleinrichtung zwei löffelartig ausgebildete Schwenkarme, welche ober- und unterhalb der Filmtransportbahn aufwickelseitig des Kopiergerätes motorisch schwenkbar angelenkt sind, und welche in zusammengeschwenktem Zustand den Wickelkern der in Arbeitsstellung befindlichen Aufwickelspule umgreifen und einen Führungkanal für das Filmvorderende bilden, der sich von der Filmtransportbahn bis zum Wickelkern erstreckt.

Besonders vorteilhaft ist es, wenn die automatische Bewegung der löffelartigen Schwenkarme und die automatische Rotation der die Aufwickelspulen tragenden Scheibe derart aufeinander abgestimmt sind, dass die Schwenkarme erst nach Beendigung der Rotation der Scheibe einschwenkbar sind.

Sehr vorteilhaft ist auch die Ausbildungsvariante, bei der die löffelartigen Schwenkarme gegenseitig vertauschbar sind, wodurch sehr einfach die Wickelrichtung des Negativfilmes auf den Wickelkern der Aufwickelspule im oder entgegen dem Uhrzeigersinn wählbar ist. Auf diese Weise kann der Negativfilmstreifen je nach Bedarf mit der Schichtseite nach aussen oder nach innen auf die Aufwickelspule gewickelt werden.

Um zu vermeiden, dass das hintere Ende des Negativfilmstreifens lose herabhängt oder das sich der Filmwickel auf der Aufwickelspule lockert, ist für jede der Aufwickelspulen eine Filmendehaltevorrichtung vorgesehen ist, die auf der aufwickelseitigen Scheibe angeordnet sind und als gegen die jeweilige Aufwickelspule schwenkbare federbelastete Schwenkarme ausgebildet sind. Wird detektiert, dass das hintere Ende des Negativfilmstreifens die Filmtransportbahn im Kopiergerät verlässt wird die jeweilige Filmhaltevorrichtung automatisch gegen den jeweiligen Filmwickel geschwenkt. Vorzugsweise ist die zu diesem Zweck ausgangs der Filmtransportbahn angeordnete Detektoreinrichtung für das Filmende einerseits mit einer Steuereinrichtung für die Filmendehaltevorrichtung und andererseits mit Steuereinrichtungen für die Antriebe der aufwickelseitigen Scheibe und der Filmeinfädeleinrichtung verbunden.

Als Sicherheitsvorrichtung weist die aufwickelseitige Scheibe vorzugsweise auch eine Ueberwachungseinrichtung, beispielsweise eine Lichtschranke, zur Ueberwachung der Anwesenheit einer Aufwickelspule in der Wartestellung auf.

Als besonders vorteilhaft erweist sich die Tatsache, dass bei dem erfindungsgemässen fotografischen Kopiergerät die leeren Vorratsspulen als Aufwickelspulen einsetzbar sind.

Bei dem erfindungsgemässen Verfahren gemäß dem Anspruch 19 zur Verarbeitung von zu langen Streifen zusammengeklebten Kopiervorlagen, insbesondere von Negativfilmstreifen, in einem fotografischen Kopiergerät wird der Negativfilmstreifen wahlweise von einer von zwei eingangs des Kopiergerätes angeordneten Vorratsspule abgewickelt und von Filmtransportmitteln entlang einer Filmtransportbahn durch das fotografische Kopiergerät transportiert wird. In einer Belichtungsstation werden auf dem Negativfilmstreifen vorhandene Vorlagen auf fotografisches Kopiermaterial, vorzugsweise auf unbelichtetes Fotopapier, aufbelichtet, welches entlang eines Papierpfades, der innerhalb des Kopiergerätes und vorzugsweise unterhalb der Filmtransportbahn verläuft, durch die Belichtungsstation transportiert wird. Nach Durchlaufen der Belichtungsstation wird der Negativfilmstreifen wahlweise auf eine von zwei ausgangseitig des Kopiergerätes angeordnete Aufwickelspulen aufgewickelt. Zu diesem Zweck werden erfindungsgemäss die jeweils aktuelle Vorratsspule und die gewählte Aufwickelspule in eine Arbeitsstellung bewegt, in der sie sich etwa in geradliniger Verlängerung und in unmittelbarer Nachbarschaft der Filmtransportbahn befinden. Die jeweils in Wartestellung gehaltene Vorratsspule bzw. Aufwickelspule hingegen werden in etwa geradliniger Verlängerung der Filmtransportbahn, jeweils hinter den in der Arbeitsstellung befindlichen Filmspulen angeordnet.

Weitere besonders bevorzugte Ausführungsvarianten ergeben sich aus der nachfolgenden Beschreibung im Zusammenhang mit den in den Figuren dargestellten Ausführungsbeispielen. Es zeigen in zum Teil schematisierter Darstellung:
- Fig. 1: eine Uebersichtsdarstellung eines Ausführungsbeispiels des erfindungsgemässen fotografischen Kopiergeräts,
- Fig. 2: den Filmpfad des fotografischen Kopiergerätes mit den abwickelseitigen Vorratsspulen und den aufwickelseitigen Aufwickelspulen,
- Fig. 3: eine Detaildarstellung der Abwickelseite des fotografischen Kopiergerätes,
- Fig. 4: eine Filmzuführvorrichtung in Wartestellung,
- Fig. 5: die Filmzuführvorrichtung in Uebergabestellung,
- Fig. 6: eine Stirnansicht der Filmzuführvorrichtung in Uebergabestellung gemäss Pfeil Pf 1 in Fig. 5,
- Fig. 7: eine Detaildarstellung der Aufwickelseite des fotografischen Kopiergerätes mit den Aufwickelspulen und einer Aufwickelvorrichtung in geöffnetem Zustand,
- Fig. 8: eine Darstellung der Aufwickelseite des fotografischen Kopiergerätes gemäss Fig. 7 mit zusammengeschwenkter Aufwickelvorrichtung und
- Fig. 9: eine Darstellung eines weiteren Ausführungsbeispiels der Aufwickelseite des fotografischen Kopiergerätes gemäss Fig. 7 mit Filmhaltevorrichtungen.

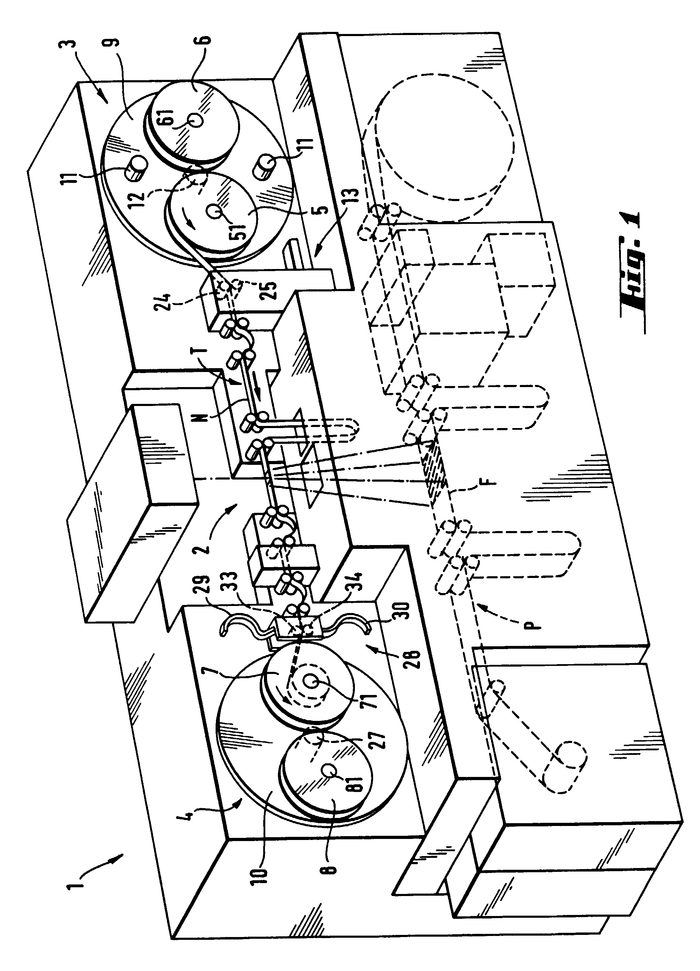

Das erfindungsgemässe fotografische Kopiergerät ist in Fig. 1 gesamthaft mit 1 bezeichnet. Insbesondere handelt es sich dabei um ein fotografisches Kopiergerät zur Verarbeitung von zu langen Streifen zusammengeklebten Kopiervorlagenlängen, insbesondere von Negativfilmstreifen N, die auf Filmspulen aufwickelbar sind. Das Kopiergerät 1 weist eine entlang einer Transportbahn T des Negativfilmstreifens N angeordnete Belichtungsstation 2 auf, in der der Negativfilmstreifen N Vorlage für Vorlage auf unbelichtetes fotografisches Kopiermaterial, insbesondere auf unbelichtetes Fotopapier F aufbelichtet wird. Das unbelichtete Fotopapier wird entlang eines innerhalb des Kopiergerätes verlaufenden Papierpfades P üblicherweise unterhalb der Filmtransportbahn T durch die Belichtungsstation 2 geführt.

Praktisch alle fotografischen Kopiergeräte neuerer Bauart arbeiten nach diesem Prinzip; ein derartiges Gerät ist beispielsweise in der US-A-4,919,354 bzw. in der dazu äquivalenten DE-A-3,737,788 beschrieben. Die Beschreibung des erfindungsgemässen fotografischen Kopiergerätes beschränkt sich daher auf die erfindungsrelevanten Unterschiede zu diesem Gerätetyp.

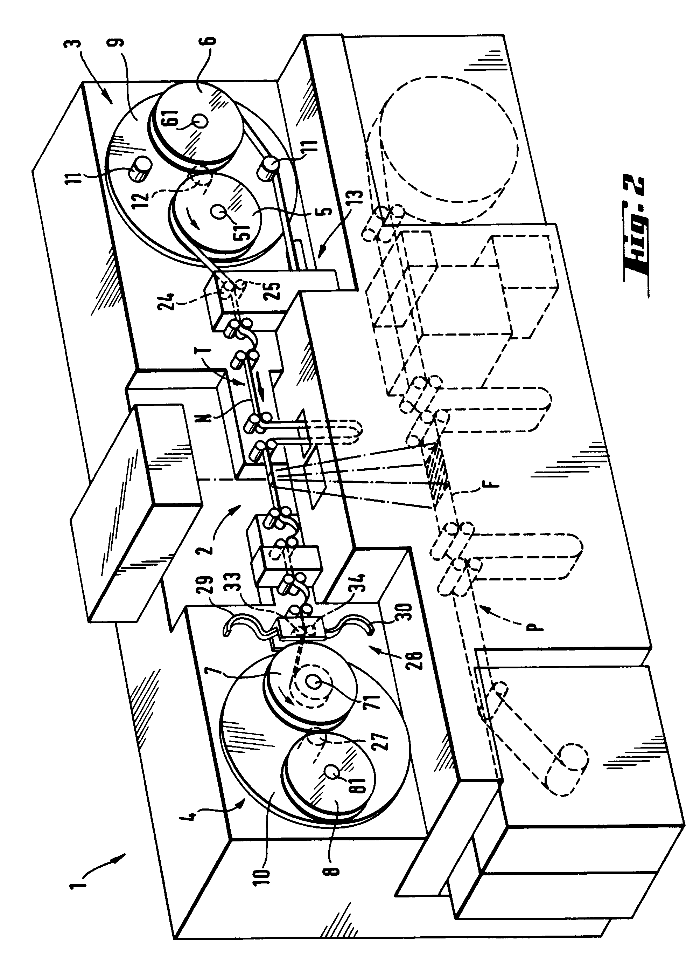

Gemäss der Darstellung in Fig. 1 und 2 sind eingangs 3 des Kopiergerätes 1 zwei Vorratsspulen 5 und 6 angeordnet, von denen der Negativfilmstreifen wahlweise abwickelbar ist. Ausgangsseitig des Kopiergerätes sind zwei Aufwickelspulen 7 und 8 dargestellt, auf die der Negativfilmstreifen N nach Passieren der Belichtungsstation 2 wahlweise aufwickelbar ist. Dabei sind jeweils eine Vorratsspule 5 und eine Aufwickelspule 7 in ihrer Arbeitsstellung mit dem gerade in Bearbeitung befindlichen Negativfilmstreifen N verbunden, die jeweils zweiten Filmspulen 6 und 8 befinden sich in Wartestellung.

Die erfindungsgemässe Ausgestaltung des fotografischen Kopiergerätes 1 besteht insbesondere darin, dass die in in ihrer Arbeitsstellung mit dem gerade bearbeiteten Negativfilmstreifen N verbundene Vorrats- bzw. Aufwickelspule 5 bzw. 7 jeweils in etwa geradliniger Verlängerung der Filmtransportbahn T unmittelbar benachbart dazu angeordnet sind, während die in Wartestellung befindlichen Filmspulen 6 und 8 in etwa geradliniger Verlängerung der Filmtransportbahn T hinter den in Arbeitsstellung befindlichen Filmspulen 5 und 7 angeordnet sind.

Besonders vorteilhaft ist es, wenn die jeweils zwei Vorratsspulen 5 und 6 eingangs 3 bzw. die beiden Aufwickelspulen 7 und 8 ausgangs 4 des fotografischen Kopiergerätes 1 derart angeordnet sind, dass die jeweils in der Arbeitstellung befindlichen Filmspulen 5 und 7 vorzugsweise automatisch in die Wartestellung bewegbar sind, wenn die Vorratsspule 5 leer bzw. die Aufwickelspule 7 voll ist. Dabei werden zugleich die zuvor in der Wartestellung befindliche volle Vorratsspule 6 und die zweite noch leere Aufwickelspule 8 in die Arbeitsstellung bewegt. Auf diese Weise muss das Bedienungspersonal nicht überprüfen, welche der Filmspulen für einen Wechsel ansteht, sondern es ist immer gewährleistet, dass jeweils die leere Vorratsspule bzw. die volle Aufwickelspule sich in der hinteren Wartestellung befindet und gegen eine neue volle Vorratsspule bzw. gegen eine neue leere Aufwickelspule zu tauschen ist.

Gemäss der Darstellung in den Fig. 1 und 2 sind die zwei Vorratsspulen 5 und 6 und die zwei Aufwickelspulen 7 und 8 jeweils an einer motorisch antreibbaren Scheibe 9 bzw. 10 angeordnet, die abwickelseitig 3 und aufwickelseitig 4 des fotografischen Kopiergerätes 1 vorgesehen sind. Es versteht sich, dass die Ausbildung als Scheibe nur beispielsweise zu sehen ist. Anstelle einer Scheibe könnten auch ein drehbares Vieleck oder ein drehbarer Arm vorgesehen sein, welche mit motorisch antreibbaren Wickeldornen für die Filmspulen ausgestattet sind. Die Drehachsen der Scheiben 9 und 10 oder ähnlicher Mittel sind bezüglich der Filmtransportbahn T etwa senkrecht orientiert.

Die Scheiben 9 und 10 könnten beispielsweise waagrecht liegend abwickel- bzw. aufwickelseitig des Kopiergerätes angebracht sein. Vorzugsweise sind sie jedoch in senkrechter Lage angebracht, wie in den Fig. 1 und 2 dargestellt. Dabei sind insbesondere die Drehachsen 12 und 27 der Scheiben 9 bzw. 10 und die jeweils beidseits der Drehachsen 12 bzw. 27 im selben Abstand dazu angeordneten Wickeldorne 51 und 61 bzw. 71 und 81 etwa in geradliniger Verlängerung in innerhalb der durch die Filmtransportbahn T definierten horizontalen Ebene angeordnet. Auf diese Weise muss der Negativfilmstreifen in horizontaler Richtung nicht umgelenkt werden und erfährt auch keinen einseitigen Zug, der zu einer Beschädigung der empfindlichen Beschichtung führen könnte.

Die Drehbarkeit der Scheiben 9 und 10 um ihre Drehachsen 12 bzw. 27 beträgt vorzugsweise mindestens 180°, um die in Arbeitsstellung und in Wartestellung befindlichen Filmspulen zu vertauschen. Bevorzugt ist aber eine vollständige Drehbarkeit um 360°, welche vorteilhafterweise über einen Schrittantrieb sichergestellt wird. Die Drehung der abwickel- und aufwickelseitigen Scheiben 9 und 10 erfolgt dabei üblicherweise im Uhrzeigersinn.

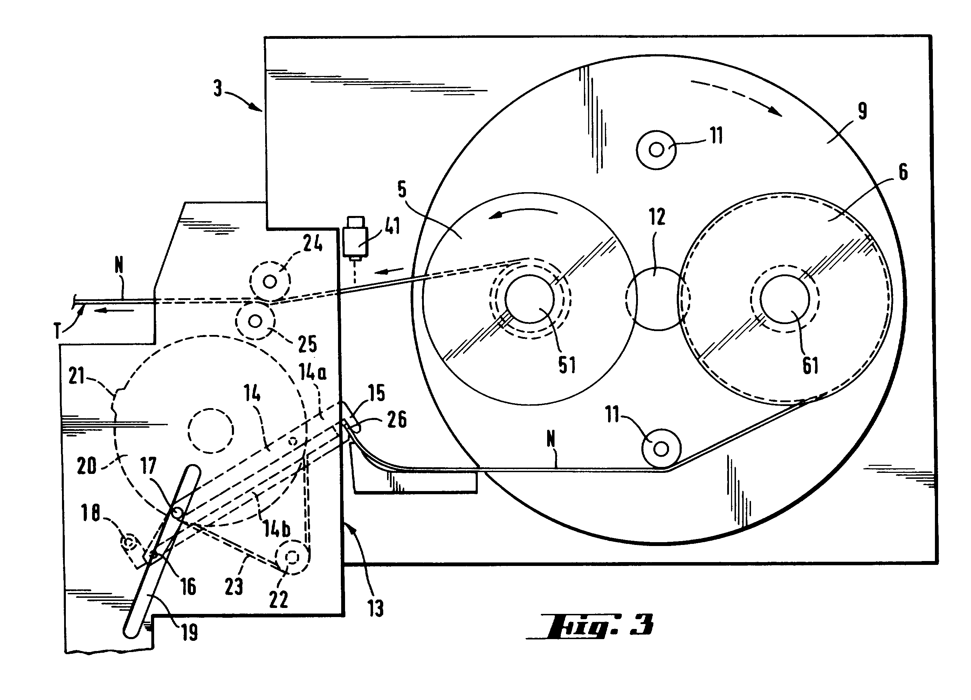

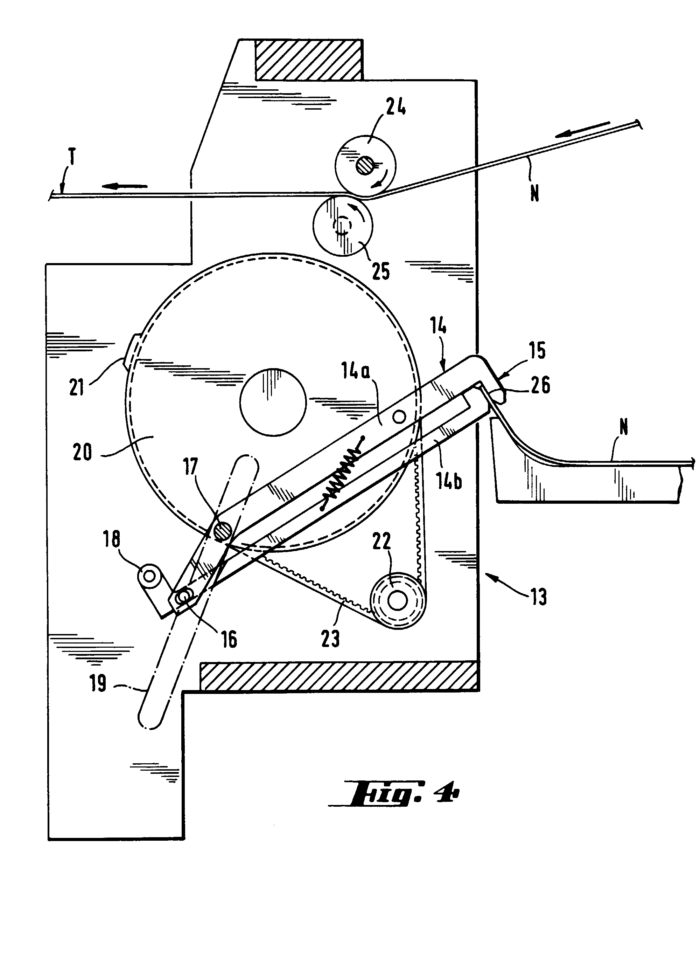

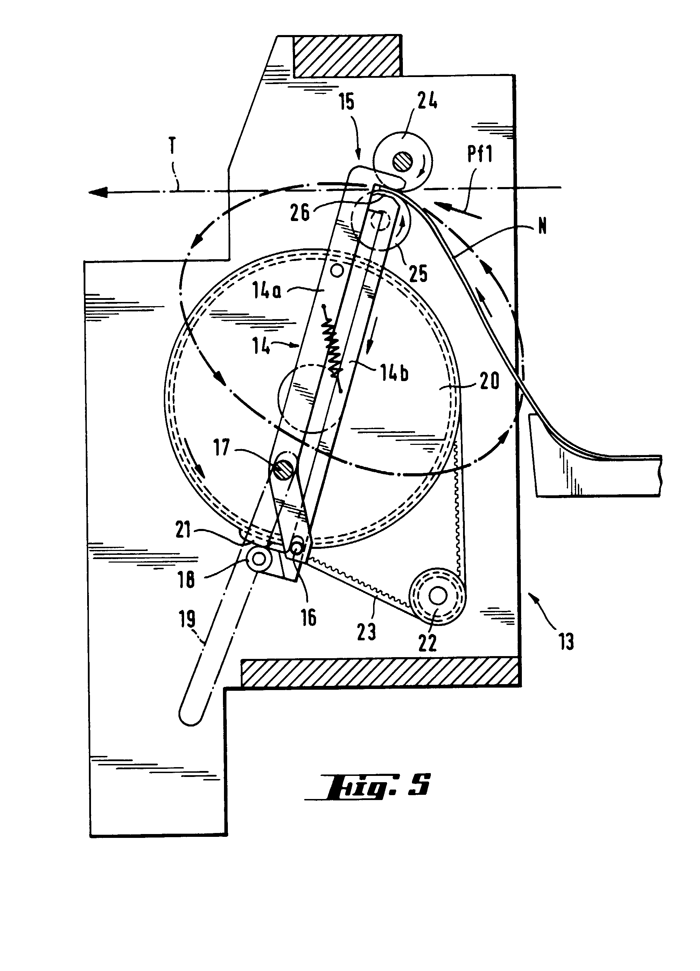

In Fig. 3 ist die Abwickelseite 3 des fotografischen Kopiergerätes 1 dargestellt. Insbesondere aus dieser Darstellung ist sehr deutlich ersichtlich, dass die Drehachse der abwickelseitigen Scheibe 9 und die Wickeldorne 51 und 61 für die Vorratsspulen 5 und 6 etwa in geradliniger Verlängerung der Filmtransportbahn angeodnet sind. Ebenfalls erkennbar sind Filmumlenkrollen 11, die ober- und unterhalb der Wickeldorne 51 und 61 an der abwickelseitigen Scheibe angeordnet sind. Diese dienen dazu, den in Reserve gehaltenen zweiten Negativfilmstreifen N von der in Wartestellung befindlichen hinteren Vorratsspule 6 an der in Arbeitsstellung befindlichen Vorratsspule 5 vorbeizuleiten. Vorzugsweise ist das fotografische Kopiergerät 1, wie in Fig. 3 und im Detail in den Fig.4 - 6 dargestellt, mit einer automatischen Filmzuführvorrichtung 13 zur Uebergabe des Filmvorderendes an ein eingangs der Filmtransportbahn T angeordnetes Filmeinzugsrollenpaar 24 und 25 ausgestattet. In einer besonders zweckmässigen Ausgestaltung umfasst die Filmzuführvorrichtung 13 einen Schwenkarm 14 und eine am Vorderende des Schwenkarms vorgesehene Filmklemme 15. Das Filmvorderende ist in einen Filmklemmspalt 26 der Filmklemme 15 einklemmbar. Der Schwenkarm ist aus einer Ruhestellung (Fig. 4) in eine Uebergabestellung (Fig. 5) bewegbar, in der der Negativfilmstreifen N dem Filmeinzugsrollenpaar 24 und 25 zugeführt wird und an dieses übergeben wird. In einer bevorzugten Ausführungsvariante ist der Schwenkarm, wie in den Fig. 4 und 5 dargestellt, exzentrisch an einer Kurbelscheibe 20 angelenkt. Die Kurbelscheibe 20 ist vorzugsweise motorisch antreibbar. Beispielsweise sind dazu, wie dargestellt, ein Antriebsritzel 22 und ein darüber geführter Zahnriemen 23 vorgesehen. Am der Filmklemme 15 gegenüberliegende Ende des Schwenkarms 14 ist ein Führungszapfen 17 vorgesehen der in einer Schlitzführung 19 gleitet. Auf diese Weise geführt vollführt der Schwenkarm 14 bei der Rotation der Kurbelscheibe 20 eine etwa eiförmig verlaufende Bahn, deren höchster Punkt etwa im Bereich des Filmeinzugsrollenpaars 24 und 25 liegt.

In einer besonders bevorzugten Ausführungsvariante ist die Filmklemme 15 durch die besondere Ausbildung des Schwenkarms 14 selbst realisiert. Insbesondere ist der Schwenkarm 14 zweiteilig ausgebildet. Der an die Kurbelscheibe 20 angelenkte Teilarm 14a ist am Vorderende schnabelförmig umgebogen. Der zweite Teilarm 14b ist im Verbindungspunkt 16 mit dem ersten verbunden und ist am Vorderende etwa hakenförmig umgebogen. Das hakenförmige Vorderende des zweiten Teilarmes 14b ist beispielsweise mit Federkraft gegen die Unterseite des schnabelförmigen Vorderteils des ersten Teilarms 14a gedrückt. Der zweite Teilarm 14b ist gegen die Wirkung dieser Federkraft axial gegenüber dem ersten Teilarm 14a verschiebbar, wobei sich zwischen dem schnabelförmigen Vorderende des ersten Teilarmes 14a und dem hakenförmigen Vorderende des zweiten Teilarmes 14b der Filmklemmspalt 26 öffnet. Während des Betriebes der Filmzuführvorrichtung 13 wird der Filmklemmspalt 26 im richtigen Augenblick automatisch geöffnet. Dazu ist am hinteren Ende des zweiten Teilarmes 14b eine Rolle 18 drehbar angeordnet, die mit einem Nocken 21 an der Kurbelscheibe 20 in Eingriff bringbar ist. In einem bestimmten Abschnitt der Drehung der Kurbelscheibe 20 läuft die Rolle 18 über den Nocken 21. Dadurch wird der zweite Teilarm 14b gegenüber dem ersten 14a axial zurückbewegt und der Filmklemmspalt 26 wird geöffnet. In dem dargestellten Ausführungsbeispiel erfolgt das Oeffnen des Filmklemmspaltes 26 vorzugsweise dann, wenn der Schwenkarm 14 entlang seiner Bewegungsbahn etwa den höchsten Punkt erreicht und der Filmklemmspalt 26 etwa auf Höhe der Filmtransportbahn T geführt ist, wie aus Fig. 5 ersichtlich ist.

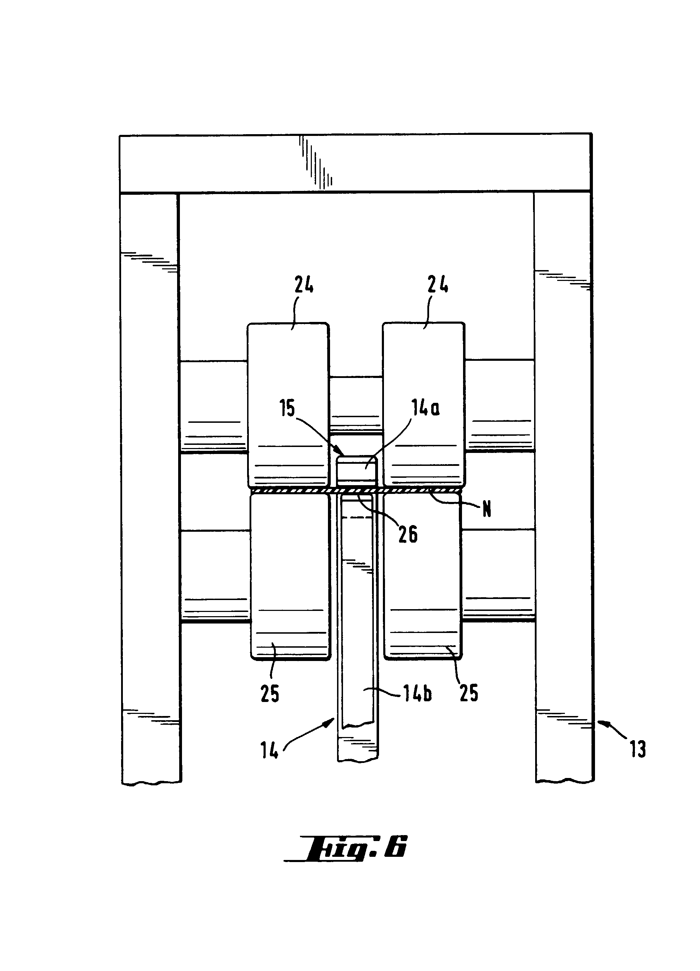

Besonders vorteilhaft ist es, wenn die untere Gegendruckrolle 25 des Filmeinzugsrollenpaars 24 und 25 geteilt ausgebildet ist. Die obere angetriebene Reibrolle 24 weist vorteilhafterweise Gummiwülste auf, die jeweils den unteren Gegendruckrollenhälften gegenüberliegend auf der oberen Rolle 24 angeordnet sind. Auf diese Weise ausgebildet ist der Schwenkarm 14 einfach zwischen den Gegendruckrollenhälften 25 hindurchbewegbar, wobei das Filmvorderende in das Filmeinzugsrollenpaar 24 und 25 einklemmbar ist, und die Filmklemme 15 automatisch lösbar ist. Diese Ausbildungsvariante ist in Fig. 6 gezeigt, welche eine Stirnansicht der Filmzuführvorrichtung 13 gemäss Pfeil Pf1 in Fig. 5 darstellt.

Es versteht sich, dass die Rotation der abwickelseitigen Scheibe 9 und des die Filmklemme 15 aufweisenden Schwenkarmes 14 aufeinander abgestimmt sind. Besonders vorteilhaft ist es, wenn die Bewegungsabfolgen derart gekoppelt sind, dass das Filmvorderende ohne Schlaufenbildung an das Filmeinzugsrollenpaar 24 und 25 übergebbar ist.

In einer bevorzugten Ausführungsvariante des fotografischen Kopiergerätes 1 (Fig. 3) sind abwickelseitig 3 Mittel 41 zur Ueberwachung des Füllgrades der in der Arbeitsstellungbefindlichen Vorratsspule 5 vorgesehen. Diese Mittel 41 können beispielsweise als Fotodetektor konventioneller Bauweise ausgebildet sein und sind mit nicht weiter dargestellten Steuereinrichtungen für die gleichfalls nicht in den Figuren dargestellten Antriebsmittel der Scheibe 6 und der Filmzuführvorrichtung 13 verbunden. Auf diese Weise ist der gesamte Ablauf des Filmspulenwechsels einfach automatisierbar.

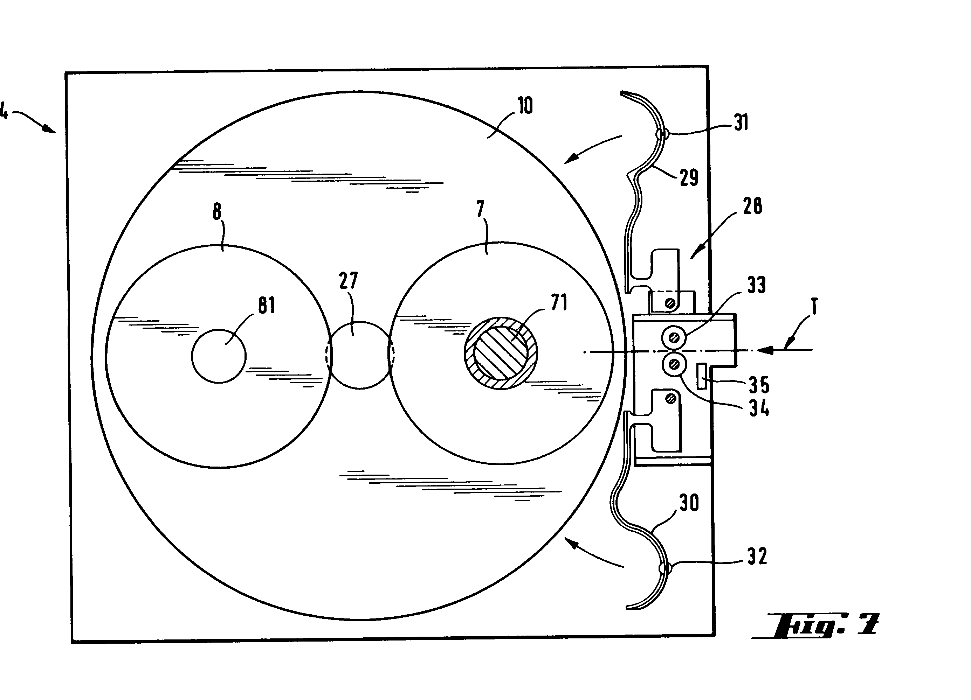

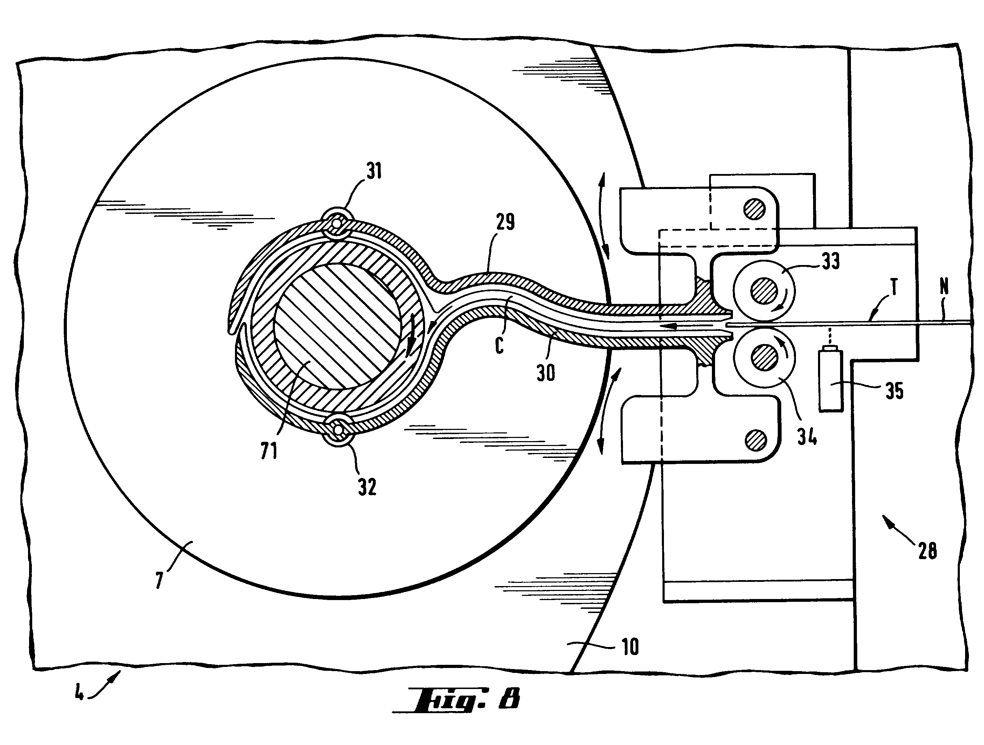

In den Fig. 7 - 9 ist die Aufwickelseite 4 des fotografischen Kopiergerätes 1 dargestellt. Wie abwickelseitig ist auch hier deutlich ersichtlich, dass die Drehachse 27 der Scheibe 10 und die beidseits der Drehachse etwa im selben Abstand dazu angeordneten Wickeldorne 71 und 81 für die Aufwickelspulen 7 und 8 etwa in geradliniger Verlängerung der Filmtransportbahn T angeordnet sind. Ausgangs des Kopiergerätes 1 ist eine Filmeinfädeleinrichtung 28 angeordnet, über die das Filmvorderende von der Filmtransportbahn T zu dem Wickelkern der in Arbeitsstellung befindlichen Aufwickelspule 7 leitbar ist. Fig. 7 zeigt die Filmeinfädeleinrichtung 28 in geöffnetem Zustand, in dem sie üblicherweise während des Kopierens des Negativfilmstreifens N vorliegt, Fig. 8 zeigt die Filmeinfädeleinrichtung 28 während des Einfädelvorganges des Filmvorderendes in geschlossenem Zustand.

Die Filmeinfädeleinrichtung 28 weist vorzugsweise zwei löffelartig ausgebildete Schwenkarme 29 und 30 auf, welche ober- und unterhalb der Filmtransportbahn T in unmittelbarer Nachbarschaft des Filmausgaberollenpaars 33 und 34 am Kopiergerät 1 angelenkt sind. Vorzugsweise sind die Schwenkarme 29 und 30 durch nicht näher bezeichnete Antriebsmittel motorisch schwenkbar. In zusammengeschwenktem Zustand umgreifen die löffelartig ausgebildeten Schwenkarme 29 und 30 den Wickelkern der in der Arbeitsstellung befindlichen Aufwickelspule 7 und bilden einen Filmführungskanal C, der sich unmittelbar von dem Filmausgaberollenpaar 33 und 34 am Ende der Filmtransportbahn T bis zum Wickelkern erstreckt. Die löffelartig ausgebildeten Schwenkarme 29 und 30 sind gegenseitig vertauschbar; auf diese Weise ist die Wickelrichtung des Negativfilmstreifens N auf den Wickelkern der Aufwickelspule 7 im oder entgegen dem Uhrzeigersinn einfach wählbar. Die Schwenkarme 29 und 30 weisen im den Wickelkern umgreifenden vorderen Bereich vorzugsweise gummibeschichtete Rollen 31 und 32 auf, welche das Einschieben des Filmvorderendes erleichtern. Es versteht sich, dass die motorische Rotation der aufwickelseitigen Scheibe 10 und die automatische Bewegung der Filmeinfädeleinrichtung 28 aufeinander abgestimmt ist. Vorzugsweise sind die löffelartig ausgebildeten Schwenkarme 29 und 30 erst nach Beendigung der Rotation der aufwickelseitigen Scheibe 10 einschwenkbar.

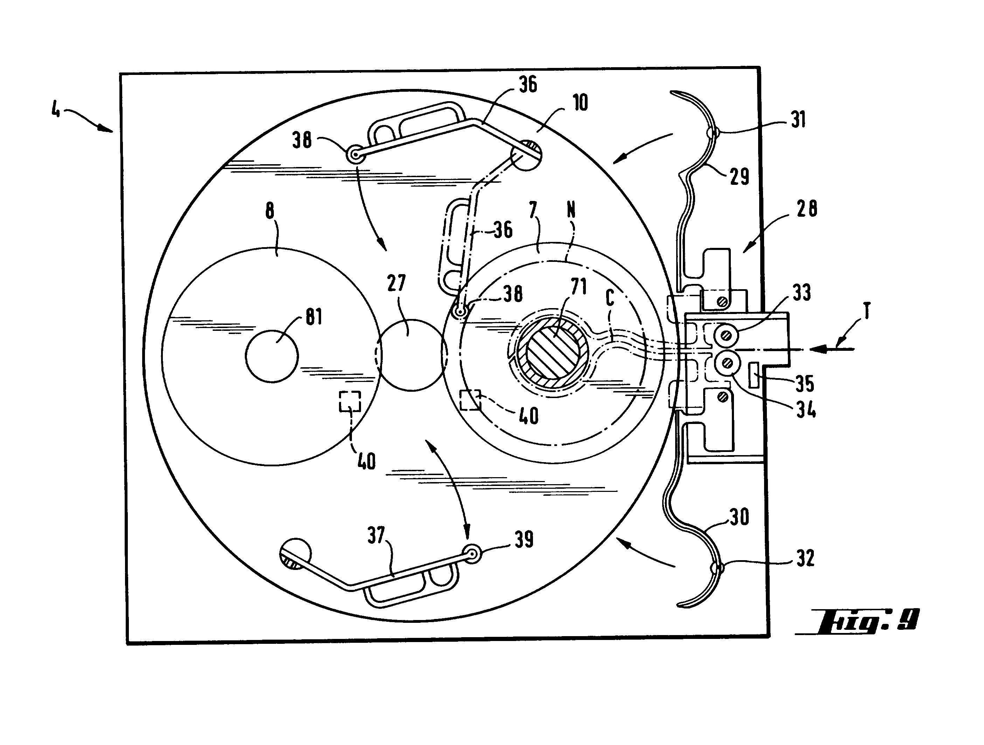

Fig. 9 zeigt ein weiteres Ausführungsbeispiel der Aufwickelseite 4 des fotografischen Kopiergerätes 1. In diesem Fall ist auf der Scheibe 10 für jede der Aufwickelspulen eine Filmhaltevorrichtung angeordnet. Vorzugsweise sind die Filmhaltevorrichtungen als federbelastete Schwenkarme 36 und 37 ausgebildet und gegen die jeweilige Aufwickelspule 7 bzw. 8 schwenkbar. In Fig. 9 sind die beiden möglichen Stellungen der Filmhalteklemme anhand der Filmhalteklemme 36 dargestellt. Dabei ist die Klemmstellung strichliert angedeutet. Die Vorderenden der Schwenkarme 36 und 37 sind mit Rollen 38 und 39 ausgestattet. Diese sind vorzugsweise aus Gummi oder entsprechend beschichtet, um Verletzungen der Oberfläche des Negativfilmstreifens beim Anliegen zu vermeiden.

In Transportrichtung des Negativfilmstreifens N unmittelbar vor dem Filmausgaberollenpaar 33 und 34 ist eine Detektoreinrichtung 35 für das hintere Ende des Negativfilmstreifens N vorgesehen. Beispielsweise ist diese Detektoreinrichtung 35 als Fotodetektor ausgebildet und mit nicht dargestellten Steuereinrichtungen für die Filmendehaltevorrichtungen 36 und 37 und die gleichfalls nicht dargestellten Antriebe der aufwickelseitigen Scheibe 10 und der Filmeinfädeleinrichtung 28 verbunden.

Gemäss der Darstellung in Fig. 9 ist die aufwickelseitige Scheibe 10 auch noch mit Ueberwachungseinrichtungen 40 zur Detektion der Anwesenheit einer Filmspule 7 oder 8 in der Wartestellung. Vorzugsweise sind diese Ueberwachungseinrichtungen als Lichtschranken ausgebildet. Auf diese Weise kann vermieden werden, dass ein Negativfilmstreifen vorgeschoben wird, obwohl überhaupt noch keine Aufwickelspule in der Arbeitsstellung angeordnet ist.

Im Betrieb unterscheidet sich das erfindungsgemässe fotografische Kopiergerät 1 von den Kopiergeräten des Standes der Technik insbesondere dadurch , dass die jeweils aktuelle Vorratsspule und die gewählte Aufwickelspule in eine Arbeitsstellung bewegt werden, in der sie sich etwa in geradliniger Verlängerung und in unmittelbarer Nachbarschaft der Filmtransportbahn befinden. Die jeweils in Wartestellung gehaltene Vorratsspule bzw. Aufwickelspule hingegen werden in etwa geradliniger Verlängerung der Filmtransportbahn, jeweils hinter den in der Arbeitsstellung befindlichen Filmspulen angeordnet.

Im normalen Kopierbetrieb befindet sich eine gefüllte Vorratsspule 5 in der Arbeitsstellung auf der Abwickelseite 3 des Kopiergerätes. Der Negativfilmstreifen N läuft durch das leer mitlaufende Filmeinzugsrollenpaar 24 und 25 zunächst beispielsweise durch eine Filmreinigung (nicht dargestellt). Von dort wird er zu der Belichtungsstation 2 transportiert, wo die eigentliche Weiterbearbeitung stattfindet. Der Abwickelantrieb (nicht dargestellt) für die Vorratsspule 5 kann im oder entgegen dem Uhrzeigersinn bewegt werden, sodass auch ein Zurückziehen des Negativfilmstreifens N möglich ist. Die Orientierung der Schichtseite des Negativfilmstreifens N - Schicht oben oder Schicht unten - kann einfach durch das Aufstecken der Vorratsspule 5 definiert werden. Die Wickelgeschwindigkeit beträgt unabhängig vom Spulendurchmesser üblicherweise bis zu 360 mm/s. Während des Abwickelns der in der Arbeitsstellung befindlichen Vorratsspule 5 wird auf den hinteren Wickeldorn 61 eine zweite volle Vorratsspule 6 aufgesteckt. Das Filmvorderende wird über die untere Umlenkrolle 11 geführt und in die Filmzuführvorrichtung 13 eingeklemmt. Eine auf den hinteren Wickeldorn 61 wirkende Reibungsbremse (nicht dargestellt) gestattet einerseits ein Abziehen des Films, verhindert aber zugleich eine unbeabsichtigte Schlaufenbildung.

Sobald die Vorratsspule in der Arbeitsstellung leer ist, liefert der Detektor 41 ein Signal, welches den Spulenwechsel auslöst. Das Filmeinzugsrollenpaar 24 und 25 wird mit einer bestimmten Einfädelgeschwindigkeit angetrieben. Der Antrieb für die Filmzuführvorrichtung 13 wird in Gang gesetzt, der Filmklemmspalt 26 der Filmklemme 15 etwa auf Höhe der Filmtransportbahn T bewegt und das Filmvorderende an das Filmeinzugsrollenpaar übergeben. Die Filmzuführvorrichtung 13 wird weiterbewegt, taucht entlang ihrer etwa eiförmig verlaufenden Bewegungsbahn unter die Filmtransportbahn T ab und wird wieder in ihre Ausgangslage bewegt. Dort wird der Antrieb abgestellt.

Etwa zugleich mit der Bewegung der Filmzuführvorrichtung 13 wird der automatische Wechselvorgang der Vorratskassetten 5 und 6 in Gang gesetzt. Dazu wird die abwickelseitige Scheibe 9, vorzugsweise mit einem Schrittantrieb (nicht dargestellt) im Uhrzeigersinn um 180° gedreht. Dabei wird die zuvor in der Arbeitsstellung befindliche Vorratskassette 5 in die Wartestellung bewegt, während die zweite volle Vorratskassette 6 aus der Wartestellung in die Arbeitsstellung bewegt wird. Auf der Antriebswelle des Schrittantriebs befindet sich eine Steuerkurve, die vor dem Eingreifen des Schrittantriebs einen Antriebshebel um einen Lagerpunkt schwenkt und dabei einerseits ein Kupplungsritzel vom Antriebszahnrad des Wickeldorns 51 trennt und andererseits eine Reibungsbremse für den Wickeldorn 51 aktiviert, sowie eine mechanische Verriegelung der abwickelseitigen Scheibe 9 löst (nicht dargestellt). Die Drehung der Scheibe 9 wird in Koordination mit der Bewegung der automatischen Filmzuführvorrichtung 13 derart gesteuert, dass beim Stellungswechsel der Filmspulen 5 und 6 keine lose Schleife entsteht, durch die der Film zerkratzt werden könnte. Nach dem Abschluss des Drehschrittes der abwickelseitigen Scheibe 9 schwenkt die Steuerkurve den Antriebshebel wieder ein. Dabei wird erstens das Antriebsritzel wieder angekoppelt, zweitens wird die Reibungsbremse des Wickeldorns 61 (der sich nun in der Arbeitsstellung befindet) gelöst und drittens wird die Scheibe 10 wieder mechanisch verriegelt (nicht dargestellt). Die nunmehr in der Arbeitsstellung befindliche volle Vorratsspule 6 wird mit dem Antrieb in Bewegung versetzt, und der normale Kopierbetrieb kann fortgesetzt werden.

Aufwickelseitig 4 des fotografischen Kopiergerätes 1 verlässt der Negativfilmstreifen N die Filmtransportbahn T durch das Filmausgaberollenpaar 33 und 34 und wird auf die in Arbeitsstellung befindliche Aufwickelspule 7 auf dem Wickeldorn 71 aufgewickelt. Der erforderliche Filmzug wird unabhängig von dem Spulendurchmesser geregelt. Der Wickeldorn 71 kann je nach der gewünschten Wickelrichtung im oder entgegen dem Uhrzeigersinn angetrieben werden. Während des Betriebes wird auf den zweiten Wickeldorn 81 eine zweite Aufwickelspule aufgesteckt.

Sobald der Detektor 35 das hintere Ende des Negativfilmstreifens N detektiert, bewirkt ein von ihr generiertes Signal dass der - nicht dargestellte - Antrieb für die in der Arbeitsstellung befindliche Aufwickelspule 7 gestoppt wird und dass die Arretierung der Filmendehaltevorrichtung 36 gelöst wird. Die Filmendehaltevorrichtung 36 wird durch eine Federkraft und in einer gedämpften Bewegung gegen die nunmehr volle Aufwickelspule 7 geschwenkt, um das Filmende festzuklemmen und ein Auffächern des Wickels zu verhindern.

Zum Positionswechsel der Aufwickelspulen 7 und 8 wird die aufwickelseitige Scheibe 10 danach mittels eines Schrittantriebes (nicht dargestellt) im Uhrzeigersinn gedreht. Dazu wird zunächst durch eine auf dem Antrieb des Schrittschaltgetriebes angebrachte Kurvenscheibe (nicht dargestellt) ein Antriebshebel um einen Lagerpunkt geschwenkt (nicht dargestellt). Dabei wird das Antriebsritzel (nicht dargestellt) vom Zahnkranz des Wickeldorns 71 getrennt, eine auf der aufwickelseitigen Scheibe 10 angeordenete Reibungsbremse für den Wickeldorn 71 aktiviert und die Scheibe 10 mechanisch entriegelt.

Nach der Drehung der aufwickelseitigen Scheibe 10 um 180° befindet sich die zuvor in Wartestellung aufgesteckte leere Aufwickelspule 8 in der Arbeitsstellung, während zugleich die nunmehr volle Aufwickelspule 7 in die Wartestellung zurückbewegt wurde. Durch die Kurvenscheibe wird der Antriebshebel wieder zurückgeschwenkt. Dabei werden das Antriebsritzel und der Zahnkranz des Wickeldorns 81 in Eingriff gebracht, die Reibungsbremse des Wickeldorns 81 gelöst und die aufwickelseitige Scheibe 10 wieder in ihrer Endstellung verriegelt. Der Antrieb versetzt sodann die neue leere Aufwickelspule 8 in der gewünschten Drehrichtung in Bewegung. Die in der Wartestellung befindliche volle Aufwickelspule 7 wird nach vorzugsweise manueller Rückstellung der Filmendehaltevorrichtung 36 vom Wickeldorn 71 abgezogen und gegen eine neue leere Aufwickelspule ersetzt. Beispielsweise kann die abwickelseitig 3 zuvor abgezogene leere Vortatsspule 5 aufwickelseitig 4 als neue leere Aufwickelspule eingesetzt werden.

Im Bereich des Filmausgaberollenpaars 33 und 34 ist die Filmeinfädeleinrichtung 28 angebracht. Die löffelartigen Schwenkarme 29 und 30 werden zu der in der Arbeitsstellung befindlichen leeren Aufwickelspule 8 geschwenkt, so dass ihre vorderen Bereiche den Wickelkern der Spule umgreifen. Auf diese Weise wird ein Kanal für den Negativfilmstreifen N gebildet, der sich vom Filmausgaberollenpaar 33 und 34 bis zum Wickelkern der Aufwickelspule 8 erstreckt. Durch Vertauschen der ober- und unterhalb der Filmtransportbahn T am Kopiergerät 1 angebrachten löffelartigen Schwenkarme 29 und 30 ist der Aufwickelsinn des Filmes im oder entgegen dem Uhrzeigersinn wählbar. Die in der Arbeitstellung befindliche Aufwickelspule 8 wird zunächst mit etwas grösserer Wickelgeschwindigkeit als die Zuführgeschwindigkeit des Negativfilmstreifens N angetrieben. Sobald der Film etwa eineinhalb bis etwa drei Umdrehungen des Wickelkerns auf die Aufwickelspule gewickelt ist, entsteht eine reibungsschlüssige Verbindung des Films mit dem Wickelkern durch Selbsthemmung. Daraus resultiert vorübergehend eine Beschleunigung des Ausgaberollenpaars 33 und 34. Sobald dies festgestellt wird, werden die löffelartigen Schwenkarme 29 und 30 wieder in ihre Ausgangsstellung zurückgeschwenkt und die Wickelgeschwindigkeit der Aufwickelrolle 8 an die Zuführgeschwindigkeit des Negativfilmstreifens N angepasst. Damit ist der aufwickelseitige Spulenwechsel beendet, und der Normalbetrieb des fotografischen Kopiergerätes kann wieder aufgenommen werden.

Das erfindungsgemässe fotografische Kopiergerät erleichtert die Aufgaben des Bedienungspersonals und lässt ihm ausreichend Zeit, um den Spulenwechsel durchzuführen. Insbesondere beschränken sich die beim Spulenwechsel erforderlichen Tätigkeiten auf das blosse Austauschen einer leeren Vorratspule gegen eine neue volle bzw. auf das Ersetzen einer vollen Aufwickelspule durch eine neue leere. Dabei ist es sogar möglich, die zuvor abwickelseitig abgezogene leere Vorratsspule aufwickelseitig als neue leere Aufwickelspule aufzustecken. Das Bedienungspersonal muss sich nicht mehr um den Füllgrad der Filmspulen kümmern und braucht auch nicht darauf zu achten, welche der abwickel- bzw. aufwickelseitig angeordneten Filmspulen nunmehr zum Wechsel ansteht. Das erfindungsgemässe fotografische Kopiergerät erlaubt einen nahezu ununterbrochenen Betrieb, beispielsweise muss nicht mehr abgewartet werden, dass der vorhergehende Negativfilmstreifen die Filmtransportbahn gänzlich verlassen hat, bevor ein neuer Negativfilmstreifen abwickelseitig eingefädelt werden kann. Insbesondere dieser Umstand erlaubt es auch, den Durchsatz und die Kopierleistung zu erhöhen.

## Patentansprüche

1. Fotografisches Kopiergerät zur Verarbeitung von zusammengeklebten/Kopiervorlagen in Form von Filmstreifen (N), die auf Filmspulen (5,6,7 und 8) aufwickelbar sind, mit einer entlang einer Transportbahn (T) des Filmstreifens (N) angeordneten Belichtungsstation (2), in der der Filmstreifen (N) Vorlage für Vorlage auf unbelichtetes fotografisches Kopiermaterial, insbesondere auf unbelichtetes Fotopapier (F), aufbelichtet wird, welches entlang eines innerhalb des Kopiergerätes (1) verlaufenden Papierpfades (P) vorzugsweise unterhalb der Filmtransportbahn (T) durch die Belichtungsstation (2) geführt wird, und mit zwei eingangsseitig (3) der Filmtransportbahn (T) angeordneten Vorratsspulen (5 und 6);für welche jeweils Wickeldorne (51 und 61) vorgesehen sind und von denen der Filmstreifen (N) wahlweise abwickelbar ist, sowie mit zwei ausgangsseitig (4) der Filmtransportbahn (T1) angeordneten Aufwickelspulen (7 und 8), für welche jeweils Wickeldorne (71 und 81) vorgesehen sind und auf die der Filmstreifen (N) nach dem Durchlauf durch die Filmtransportbahn (T) wahlweise aufwickelbar ist, wobei jeweils eine Vorratsspule (5) und eine Aufwickelspule (7) mit dem gerade bearbeiteten Filmstreifen (N) verbunden sind und die jeweils anderen (6 bzw. 8) sich in Warteposition befinden, dadurch gekennzeichnet, dass die in Arbeitsstellung mit dem gerade bearbeiteten Filmstreifen (N) verbundene Vorrats-bzw. Aufwickelspule (5,7)jeweils derart unmittelbar benachbart zu der Filmtransportbahn (T) angeordnet ist, dass die zugehörigen Wickeldorne (51,71) in etwa geradliniger Verlängerung der Filmtransportbahn (T) angeordnet sind, während die jeweils in Wartestellung befindliche Vorrats-bzw. Aufwickelspule (6,8) in etwa geradliniger Verlängerung der Filmtransportbahn (T) hinter der jeweils in Arbeistellung befindlichen Vorrats-bzw. Aufwickelspule (5,7) angeordnet ist, dass ferner die jeweils zwei Vorratsspulen (5 und 6) abwickelseitig (3) bzw. die beiden Aufwickelspulen (7 und 8) aufwickelseitig (4) des fotografischen Kopierprätes (1) derart angeordnet sind, dass die jeweils in der Arbeitstellung befindliche Vorrats-bzw. Aufwickelspule (5 und 7) automatisch in die Wartestellung bewegbar ist, wenn die Vorratsspule (5) leer bzw. die Aufwickelspule (7) voll ist, wobei zugleich die in der Wartestellung befindliche volle Vorratsspule (6) und die leere zweite Aufwickelspule (8) in die Arbeitsstellung bewegt werden, und dass weiterhin eingangsseitig (3) der Filmtransportbahn (T) eine automatische Filmzuführvorrichtung (13) zur Uebergabe des Filmvorderendes der in Wartestellung befindlichen Vorratsspule (6) an ein eingangs der Filmtransportbahn (T) vorgesehenes Filmeinzugsrollenpaar (24,25) vorgesehen ist.

2. Vorrichtung nach Anspruch 1, dadurch gekennzeichnet, dass die zwei Vorratsspulen (5,6) und die zwei Aufwickelspulen (7,8) jeweils auf einer abwickel- (3) und aufwickelseitig (4) vorgesehenen, motorisch antreibbaren Scheibe (9 bzw. 10) oder ähnlichem angeordnet sind, deren Drehachsen (12 bzw. 27) etwa senkrecht zu der Filmtransportbahn (T) angeordnet sind.

3. Vorrichtung nach Anspruch 2, dadurch gekennzeichnet, dass die Scheiben (9,10) etwa vertikal und abwickel- (3) und aufwickelseitig (4) derart angebracht sind, dass die Drehachsen (12, 27) der Scheiben (9,10) und die beidseits der Drehachsen (12,27) im selben Abstand dazu angeordnete Wickeldorne (51,61,71,81) für die Filmspulen (5,6,7,8) etwa in geradliniger Verlängerung und innerhalb der durch die Filmtransportbahn (T) definierten Ebene angeordnet sind.

4. Vorrichtung nach Anspruch 2 oder 3, dadurch gekennzeichnet, dass die die Filmspulen (5,6 bzw. 7,8) tragenden Scheiben (9,10) oder ähnliches um wenigstens 180° um ihre Drehachsen (12,27) drehbar sind, derart, dass die in Wartestellung befindliche Vorrats- (6) bzw. Aufwickelspule (8) in die Arbeitsstellung bewegbar sind und umgekehrt.

5. Vorrichtung nach einem der Ansprüche 2 - 4, dadurch gekennzeichnet, dass der Antrieb der Scheiben (9,10) über einen Schrittmotor und vorzugsweise im Uhrzeigersinn erfolgt.

6. Vorrichtung nach Anspruch 5, dadurch gekennzeichnet, dass die Filmzuführvorrichtung (13) einen Schwenkann (14) und eine am Vorderende des Schwenkarmes (14) vorgesehene Filmklemme (15) umfasst, in die das Filmvorderende einklemmbar ist, welche aus einer Ruhestellung in eine Uebergabestellung bewegbar ist, in der der Filmstreifen (N) an das Filmeinzugsrollenpaar (24,25) übergeben wird.

7. Vorrichtung nach Anspruch 6, dadurch gekennzeichet, dass der Schwenkarm (14) exzentrisch an einer motorisch antreibbaren Kurbelscheibe (20) angelenkt ist, die etwa unterhalb des Filmeinzugsrollenpaars (24,25) angeordnet ist, und dass das der Filmklemme (15) gegenüberliegende Ende des Schwenkarms (14) in einer Schlitzführung (19) geführt ist.

8. Vorrichtung nach Anspruch 6 oder 7, dadurch gekennzeichnet, dass die untere Gegendruckrolle (25) des Filmeinzugsrollenpaars (24,25) geteilt ausgebildet ist, dass der Schwenkarm (14) mit der Filnklemme (15) zwischen den geteilten Rollen durchführbar ist, wobei der Klemmspalt (26) der Filmklemme (15) etwa auf Höhe der Filmtransportbahn (T) geführt ist, und dass die Filmklemme (15) beim Passieren des Filmeinzugsrollenpaars (24,25) automatisch lösbar ist, wobei das Filmvorderende in das Filmeinzugsrollenpaar (24,25) einklemmbar ist.

9. Vorrichtung nach einem der Ansprüche 6 - 8, dadurch gekennzeichnet, dass die Rotation der die Filmvorratsspulen (5,6) tragenden abwickelseitigen Scheibe (9) und die Bewegung des mit der Filmklemme (15) für das Filmvorderende versehenen Schwenkarms (14) derart gekoppelt ist, dass das Filmvorderende ohne Schlaufenbildung an das Filmeinzugsrollenpaar (24,25) übergebbar ist.

10. Vorrichtung nach einem der Ansprüche 6 - 9, dadurch gekennzeichnet, dass Mittel (41) zur Ueberwachung des Füllgrades der in Arbeitsstellung befindlichen Vorratsspule (5) vorgesehen sind, welche mit Steuereinrichtungen für die Antriebsmittel der die Vorratsspulen (5,6) tragende Scheibe (9) und der Filmzuführvorrichtung (13) verbunden sind.

11. Vorrichtung nach einem der vorangehenden Ansprüche, dadurch gekennzeichnet, dass aufwickelseitig (4) eine automatisch betätigbare Filmeinfädeleinrichtung (28) angeordnet ist, über welche das Filmvorderende von der Filmtransportbahn (T) zu dem Wickelkern der in der Arbeitsstellung befindlichen Aufwickelspule (7) leitbar ist.

12. Vorrichtung nach Anspruch 11, dadurch gekennzeichnet, dass die Filmeinfädeleinrichtung (28) zwei löffelartig ausgebildete Schwenkarme (29,30) umfasst, welche ober- und unterhalb der Filmtransportbahn (T) und in unmittelbarer Nachbarschaft eines Filmausgaberollenpaars (33,34) aufwickelseitig (4) motorisch schwenkbar angelenkt sind, und welche in zusammengeschwenktem Zustand den Wickelkern der in Arbeitsstellung befindlichen Aufwickelspule (7) umgreifen und einen Führungkanal (C) für das Filmvorderende bilden, der sich vom Filmausgaberollenpaar (33,34) bis zum Wickelkern der Aufwickelspule (7) erstreckt.

13. Vorrichtung nach Anspruch 12, dadurch gekennzeichnet, dass die automatische Bewegung der löffelartigen Schwenkarme (29,30) und die automatische Rotation der die Aufwickelspulen (7,8) tragenden Scheibe (10) derart aufeinander abgestimmt sind, dass die Schwenkarme (29,30) erst nach Beendigung der Rotation der Scheibe (10) einschwenkbar sind.

14. Vorrichtung nach Anspruch 12 oder 13, dadurch gekennzeichnet, dass die löffelartigen Schwenkarme (29,30) in ihrer Anordnung gegenseitig vertauschbar sind, und dass dadurch die Wickelrichtung des Filmstreifens (N) auf den Wickelkern der Aufwickelspule (7) im oder entgegen dem Uhrzeigersinn wählbar ist.

15. Vorrichtung nach einem der Ansprüche 11 - 14, dadurch gekennzeichnet, dass für jede der Aufwickelspulen (7,8) eine Filmendehaltevorrichtung (36,37) vorgesehen ist, die auf der aufwickelseitigen Scheibe (10) angeordnet sind und als gegen die jeweilige Aufwickelspule (7 bzw. 8) schwenkbare federbelastete Schwenkarme ausgebildet sind.

16. Vorrichtung nach einem der Ansprüche 11 - 15, dadurch gekennzeichnet, dass die aufwickelseitige Scheibe (10) Ueberwachungseinrichtungen (40), vorzugsweise Lichtschranken, zur Ueberwachung der Anwesenheit von Aufwickelspulen (7,8) auf der Scheibe (10) aufweist.

17. Vorrichtung nach Anspruch 15 oder 16, dadurch gekennzeichnet, dass ausgangs der Filmtransportbahn (T) eine Detektoreinrichtung (35) für das Filmende angeordnet ist, welche einerseits mit einer Steuereinrichtung für die Filmendehaltevorrichtungen (36,37) und andererseits mit Steuereinrichtungen für die Antriebe der aufwickelseitigen Scheibe (10) und der Filmeinfädeleinrichtung (28) verbunden ist.

18. Vorrichtung nach einem der vorangehenden Ansprüche, dadurch gekennzeichnet, dass die leeren Vorratsspulen als Aufwickelspulen einsetzbar sind.

19. Verfahren zur Verarbeitung von zusammengeklebten Kopiervorlagen in Form von Filmstreifen (N) in einem fotografischen Kopiergerät, (1) bei dem der Negativfilmstreifen (N) wahlweise von einer von zwei eingangs (3) des Kopiergerätes (1) angeordneten Vorratsspulen (5,6), welche sich auf Wickeldornen (51,61) befinden, abgewickelt wird und von Filmtransportmitteln entlang einer Filmtransportbahn (T) durch das fotografische Kopiergerät (1) transportiert wird, wobei auf dem Filmstreifen (N) vorhandene Vorlagen in einer Belichtungsstation (2) auf fotografisches Kopiermaterial, vorzugsweise auf unbelichtetes Fotopapier (F), aufbelichtet werden, welches entlang eines Papierpfades (P), der innerhalb des Kopiergerätes (1) und vorzugsweise unterhalb der Filmtransportbahn (T) verläuft, durch die Belichtungsstation (2) transportiert wird, und welcher nach Durchlaufen der Belichtungsstation (2) wahlweise auf eine von zwei ausgangseitig (4) des Kopiergerätes (1) angeordnete Aufwickelspulen (7,8), welche sich auf Wickeldornen (71,81) befinden, aufgewickelt wird, dadurch gekennzeichnet, dass die jeweils für das Abwickeln und das Aufwickeln gewählte Vorratsspule (5) bzw. Aufwickelspule (7) in eine Arbeitsstellung bewegt werden, in der sie sich in unmittelbarer Nachbarschaft der Filmtransportbahn (T) befinden, wobei sich die zugehörigen Wickeldorne (51 bzw. 71) etwa in geradliniger Verlängerung der Filmtransportbahn (T) befinden, dass die jeweils in Wartestellung gehaltene Vorratsspule (6) bzw. Aufwickelspule (8) in etwa geradliniger Verlängerung der Filmtransportbahn (T) jeweils hinter der jeweils in der Arbeitsstellung befindlichen Vorrats- bzw. Aufwieckelspule (5,7) angeordnet wird, dass ferner die jeweils in der Arbeitsstellung befindliche Vorrats- bzw. Aufwickelspule (5,7) vorzugsweise automatisch in die Wartestellung bewegt wird, wenn die Vorratsspule (5) leer bzw. die Aufwickelspule (7) voll ist, wobei zugleich die in der Wartestellung befindliche volle Vorratsspule (6) und die leere zweite Aufwickelspule (8) in die Arbeitsstellung bewegt werden, und dass weiterhin das Filmvorderende der in Wartestellung befindlichen Vorratsspule (6) durch eine Filmeinzugsvorrichtung (13) automatisch an ein eingangs der Filmtransportbahn (T) befindliches Filmeinzugsrollenpaar (24,25) übergeben wird.

## Claims

1. A photographic copying apparatus for the processing of bonded-together copy masters in the form of film strips (N), which can be wound onto film spools (5, 6, 7 and 8), having an exposure station (2) arranged along a transport path (T) of the film strip (N), in which station the film strip (N) is exposed, master after master, onto unexposed photographic copy material, especially unexposed photographic paper (F), which is guided through the exposure station (2) along a paper path (P) that extends within the copying apparatus (1), preferably below the film transport path (T); and having two supply spools (5 and 6) arranged at the inlet side (3) of the film transport path (T), for each of which spools a winding spindle (51 and 61) is provided and from which the film strip can selectively be unwound; and also having two take-up spools (7 and 8) arranged at the outlet side (4) of the film transport path (T) for each of which spools a winding spindle (71 and 81) is provided and onto which the film strip (N) can selectively be wound after passing through the film transport path (T), one supply spool (5) and one take-up spool (7) being connected to the negative film strip (N) that is being processed while the other supply spool (6) and the other take-up spool (8) are located in their waiting positions, wherein the supply and take-up spools (5, 7) connected in the operating position to the film strip (N) that is being processed are each so arranged directly adjacent to the film transport path (T) that the associated winding spindles (51, 71) are arranged in an approximately straight-line extension of the film transport path (T), while the supply and take-up spools (6, 8) located in the waiting position are each arranged in an approximately straight-line extension of the film transport path (T), behind the supply and take-up spools (5, 7), respectively, located in the operating position, and wherein further the two supply spools (5 and 6) are so arranged at the unwinding side (3) and the two take-up spools (7 and 8) so arranged at the wind-up side (4) of the photographic copying apparatus (1) that the supply and take-up spools (5 and 7) located in the operating position can each be automatically moved into the waiting position when the supply spool (5) is empty and the take-up spool (7) is full, and simultaneously the full supply spool (6) located in the waiting position and the empty second take-up spool (8) are moved into the operating position, and wherein furthermore there is provided at the inlet side (3) of the film transport path (T) an automatic film feed device (13) for transferring the front end of the film of the supply spool (6) located in the waiting position to a pair of film draw-in rollers (24, 25) provided at the inlet of the film transport path (T).

2. An apparatus according to claim 1, wherein the two supply spools (5, 6) and the two take-up spools (7, 8) are in each case arranged on a motor-driven disk (9 and 10) or the like provided at the unwinding side (3) and the wind-up side (4), the axes of rotation (12 and 27) of which disks are arranged approximately perpendicular to the film transport path (T).

3. An apparatus according to claim 2, wherein the disks (9, 10) are mounted approximately vertically and in such a manner at the unwinding (3) and wind-up (4) sides that the axes of rotation (12, 27) of the disks (9, 10) and the winding spindles (51, 61, 71, 81) for the film spools (5, 6, 7, 8), which spindles are arranged at both sides of the axes of rotation (12, 27) equidistant therefrom, are arranged approximately in a straight-line extension and within the plane defined by the film transport path (T).

4. An apparatus according to either claim 2 or claim 3, wherein the disks (9, 10) or the like carrying the film spools (5, 6 and 7, 8) are rotatable through at least 180° about their axes of rotation (12, 27) in such a manner that the supply spool (6) and the take-up spool (8) located in the waiting position can be moved into the operating position, and vice versa.

5. An apparatus according to any one of claims 2 to 4, wherein the disks (9, 10) are driven by a stepping motor, and preferably in the clockwise direction.

6. An apparatus according to claim 5, wherein the film feed device (13) comprises a pivoting arm (14) and a film grip (15), provided at the front end of the pivoting arm (14), in which grip the front end of the film can be clamped and which is movable from a rest position into a transfer position in which the film strip (N) is transferred to the pair of film draw-in rollers (24, 25).

7. An apparatus according to claim 6, wherein the pivoting arm (14) is pivoted eccentrically on a motor-driven crank disk (20) arranged approximately beneath the pair of film draw-in rollers (24, 25) and wherein that end of the pivoting arm (14) which lies opposite to the film grip (15) is guided in a slotted guide (19).

8. An apparatus according to either claim 6 or claim 7, wherein the lower counter-pressure roller (25) of the pair of film draw-in rollers (24, 25) is divided, the pivoting arm (14) with the film grip (15) can be guided between the divided rollers, the clamping nip (26) of the film grip (15) being guided approximately at the level of the film transport path (T), and the film grip (15) is automatically releasable when it passes the pair of film draw-in rollers (24, 25), it being possible for the front end of the film to be clamped by the pair of film draw-in rollers (24, 25).

9. An apparatus according to any one of claims 6 to 8, wherein the rotation of the disk (9) that carries the film supply spools (5, 6) and is located at the unwinding side is so coupled with the movement of the pivoting arm (14) that is provided with the film grip (15) for the front end of the film that the front end of the film can be transferred to the pair of film draw-in rollers (24, 25) without the formation of a loop.

10. An apparatus according to any one of claims 6 to 9, wherein means (41) are provided for monitoring the degree of fullness of the supply spool (5) located in the operating position, which means are connected to control devices for the drive means of the disk (9) carrying the supply spools (5, 6) and of the film feed device (13).

11. An apparatus according to any one of the preceding claims, wherein there is arranged at the wind-up side (4) an automatic film-threading device (28) by means of which the front end of the film can be guided from the film transport path (T) to the winding core of the take-up spool (7) located in the operating position.

12. An apparatus according to claim 11, wherein the film-threading device (28) comprises two spoon-like pivoting arms (29, 30), which are mounted in a motor-pivotable manner above and below the film transport path (T) and directly adjacent to a pair of film discharge rollers (33, 34) at the wind-up side (4), and which, in the pivoted-together position, surround the winding core of the take-up spool (7) located in the operating position and form a guide channel (C) for the front end of the film, which channel extends from the pair of film discharge rollers (33, 34) to the winding core of the take-up spool (7).

13. An apparatus according to claim 12, wherein the automatic movement of the spoon-like pivoting arms (29, 30) and the automatic rotation of the disk (10) carrying the take-up spools (7, 8) are so coordinated that the pivoting arms (29, 30) cannot be pivoted in until after the rotation of the disk (10) is complete.

14. An apparatus according to either claim 12 or claim 13, wherein the spoon-like pivoting arms (29, 30) are mutually interchangeable in their arrangement and wherein the winding direction of the film strip (N) onto the winding core of the take-up spool (7) may therefore be either clockwise or anticlockwise, as desired.

15. An apparatus according to any one of claims 11 to 14, wherein there is provided for each take-up spool (7, 8) a film-end-holding device (36, 37), those devices being arranged on the disk (10) at the wind-up side and taking the form of spring-loaded pivoting arms pivotable towards the respective take-up spool (7 or 8).

16. An apparatus according to any one of claims 11 to 15, wherein the disk (10) at the wind-up side has monitoring devices (40), preferably light barriers, for monitoring the presence of take-up spools (7, 8) on the disk (10).

17. An apparatus according to either claim 15 or claim 16, wherein there is arranged at the outlet of the film transport path (T) a detector device (35) for the film end, which device is connected on the one hand to a control means for the film-end-holding devices (36, 37) and on the other hand to control means for the drives of the disk (10) at the wind-up side and of the film-threading device (28).

18. An apparatus according to any one of the preceding claims, wherein the empty supply spools can be used as take-up spools.

19. A method of processing bonded-together copy masters in the form of film strips (N) in a photographic copying apparatus (1), in which process the negative film strip (N) is selectively unwound from one of two supply spools (5, 6) arranged at the inlet (3) of the copying apparatus (1), which spools are located on winding spindles (51, 61), and is transported by film-transporting means along a film transport path (T) through the photographic copying apparatus (1), masters present on the film strip (N) being exposed in an exposure station (2) onto photographic copy material, preferably unexposed photographic paper (F), which copy material is transported through the exposure station (2) along a paper path (P) that extends within the copying apparatus (1) and preferably below the film transport path (T), and which film strip, after passing through the exposure station (2), is selectively wound onto one of two take-up spools (7, 8) which are arranged at the outlet side (4) of the copying apparatus (1) and located on winding spindles (71, 81), wherein the supply spool (5) and take-up spool (7) selected for the unwinding and winding up, respectively, are moved into an operating position in which they are located directly adjacent to the film transport path (T), the associated winding spindles (51 and 71) being located approximately in a straight-line extension of the film transport path (T), and wherein the supply spool (6) and take-up spool (8) held in the waiting position are each arranged in an approximately straight-line extension of the film transport path (T), behind the supply and take-up spools (5, 7), respectively, located in the operating position, and wherein furthermore the supply and take-up spools (5, 7) located in the operating position are each moved, preferably automatically, into the waiting position when the supply spool (5) is empty and the take-up spool (7) is full, the full supply spool (6) located in the waiting position and the empty second take-up spool (8) simultaneously being moved into the operating position, and wherein furthermore the front end of the film of the supply spool (6) located in the waiting position is automatically transferred by means of a film draw-in device (13) to a pair of film draw-in rollers (24, 25) located at the inlet of the film transport path (T).

## Revendications

1. Tireuse photographique pour le traitement d'originaux à tirer, regroupés par collage sous forme de rubans de film (N) qui peuvent se bobiner sur des bobines de film (5,6,7 et 8), comportant une station d'exposition (2) qui est disposée le long d'un chemin de transport (T) du ruban de film (N) et dans laquelle le ruban de film (N) est, original après original, exposé pour transfert sur un matériau de tirage photographique non exposé, en particulier sur un papier photographique non exposé (F), qui est guidé le long d'un chemin (P) du papier courant à l'intérieur de la tireuse (1), de préférence en dessous du chemin (T) de transport du film, à l'intérieur de la station d'exposition (2), et comportant deux bobines débitrices (5 et 6) qui sont disposées du côté de l'entrée (3) du chemin (T) de transport du film, pour chacune desquelles des mandrins de bobinage (51 et 61) sont prévus et desquelles, au choix, on peut dérouler le ruban de film (N), ainsi que comportant deux bobines de rembobinage (7 et 8) qui sont disposées du côté de la sortie (4) du chemin (T) de transport du film, pour chacune desquelles des mandrins de bobinage (71 et 81) sont prévus et sur lesquelles, au choix, le ruban de film (N) peut se rembobiner après avoir parcouru le chemin T de transport du film, tireuse dans le cas de laquelle une bobine débitrice (5) et une bobine de rembobinage (7) sont chaque fois reliées avec le ruban (N) de film négatif en cours de traitement tandis que les autres (6 ou 8) se trouvent en position d'attente, caractérisée par le fait que la bobine débitrice ou la bobine de rembobinage (5, 7) qui, en position de travail, est reliée avec le ruban de film (N) en cours de traitement, est chaque fois disposée directement à côté du chemin (T) de transport du film de façon que les mandrins de bobinage (51,71) correspondants soient disposés dans le prolongement à peu près rectiligne du chemin (T) de transport du film, tandis que la bobine débitrice ou la bobine de rembobinage (6,8) qui se trouve chaque fois en position d'attente est disposée sur le prolongement à peu près rectiligne du chemin (T) de transport du film, derrière la bobine débitrice ou la bobine de rembobinage (5,7) qui se trouve respectivement en position de travail, par le fait qu'en outre les bobines débitrices, qui sont chaque fois deux, (5 et 6) sont disposées, du côté du débobinage (3), ou bien que les deux bobines de rembobinage (7 et 8), sont disposées du côté du rembobinage (4) de la tireuse photographique (1) de façon telle que la bobine débitrice ou la bobine de rembobinage (5 et 7) qui se trouve chaque fois en position de travail peut passer automatiquement en position d'attente lorsque la bobine débitrice (5) est vide ou que la bobine de rembobinage (7) est pleine, étant précisé qu'en même temps la bobine débitrice plein (6) qui se trouve en position d'attente et la seconde bobine de rembobinage, vide, (8) se déplacent en position de travail et en ce qu'en outre, du côté de l'entrée (3) du chemin (T) de transport du film, est prévu un dispositif d'amenée automatique du film (13) pour transférer l'extrémité avant du film de la bobine débitrice (6) qui se trouve en position d'attente à une paire de rouleaux (24, 25) d'enfilage du film prévue à l'entrée du chemin (T) de transport du film.

2. Dispositif selon la revendication 1, caractérisé par le fait que les deux bobines débitrices (5,6) et les deux bobines de rembobinage (7,8) sont chacune disposées sur un disque (9 ou 10) ou analogue, qui est prévu du côté de débobinage (3) et du côté de rembobinage (4), qui peut être entraîné par un moteur et dont les axes de rotation (12 ou 27) sont disposés à peu près perpendiculairement au chemin (T) de transport du film.

3. Dispositif selon la revendication 2, caractérisé par le fait que les disques (9,10) sont rapportés à peu près verticalement et, du côté de débobinage (3) et du côté de rembobinage (4), de façon que les axes de rotation (12,27) des disques (9,10) et les mandrins de bobinage (51,61,71,81), disposés, dans ce but, des deux côtés des axes de rotation (12,27) à la même distance, pour les bobines de film (5,6,7,8) sont à peu près disposés en prolongement rectiligne et à l'intérieur du plan défini par le chemin (T) de transport du film.

4. Dispositif selon la revendication 2 ou 3, caractérisé par le fait que les disques (9,10), ou analogues, portant les bobines de film (5,6 ou 7,8) peuvent tourner d'au moins 180° autour de leurs axes de rotation (12,27) de façon que la bobine débitrice (6) ou la bobine de rembobinage (8) qui se trouvent en position d'attente puissent passer en position de travail et inversement.

5. Dispositif selon l'une des revendications 2-4, caractérisé par le fait que l'entraînement des disques (9,10) se fait au moyen d'un moteur pas à pas et de préférence dans le sens horaire.

6. Dispositif selon la revendication 5, caractérisé par le fait que le dispositif d'amenée des films (13) comporte un bras pivotant (14) et une pince à film (15) qui est prévue à l'extrémité avant du bras pivotant (14) et dans laquelle peut se pincer l'extrémité avant du film qui peut passer, d'une position de repos, dans une position de transfert dans laquelle le ruban de film (N) est transféré à la paire de rouleaux d'enfilage du film (24,25).

7. Dispositif selon la revendication 6, caractérisé par le fait que le bras pivotant (14) est articulé excentriquement à un disque à manivelle (20) qui peut être entraîné par un moteur et qui est disposé à peu près en dessous de la paire de rouleaux d'enfilage du film (24,25) et que l'extrémité du bras pivotant (14) opposée à la pince à film (15) est guidée dans un guidage à coulisse (19).

8. Dispositif selon la revendication 6 ou 7, caractérisé par le fait que le rouleau inférieur de contre-pression (25) de la paire de rouleaux d'enfilage du film (24,25) est conçu divisé, que le bras pivotant (14) peut, avec la pince à film (15), passer entre les rouleaux divisés, la fente (26) de la pince à film (15) étant amenée à peu près à hauteur du chemin (T) de transport du film, et que, lorsqu'elle passe dans la paire de rouleaux d'enfilage du film (24,25), la pince à film (15) se desserre automatiquement, l'extrémité avant du film étant alors serrée dans la paire de rouleaux d'enfilage du film (24,25).

9. Dispositif selon l'une des revendications 6-8, caractérisé par le fait que la rotation du disque (9) qui porte les bobines débitrices du film (5,6) du côté débobinage et le mouvement du bras pivotant (14), muni de la pince à film (15) pour l'extrémité avant du film, sont couplés de façon que l'extrémité avant du film puisse être transférée à la paire de rouleaux d'enfilage du film (24,25) sans former de boucle.

10. Dispositif selon l'une des revendications 6-9, caractérisé par le fait que sont prévus des moyens (4) de surveillance du taux de remplissage de la bobine débitrice qui se trouve en position de travail, qui sont reliés à des organes de commande pour les moyens d'entraînement du disque (9) qui porte les bobines débitrices (5,6) et au dispositif d'enfilage du film (13).

11. Dispositif selon l'une des revendications précédentes, caractérisé par le fait que, du côté rembobinage (4), est disposé un dispositif d'enfilage du film (28) qui est manoeuvrable automatiquement et au moyen duquel l'extrémité avant du film peut être conduite, depuis le chemin (T) de transport du film, au noyau de la bobine de rembobinage (7) qui se trouve en position de travail.

12. Dispositif selon la revendication 11, caractérisé par le fait que l'organe d'enfilage du film (28) comporte deux bras pivotants (29,30) qui sont conçus en forme de cuiller, qui sont articulés, avec liberté d'être entraînés en pivotement par un moteur, au-dessus et au-dessous du chemin (T) de transport du film et au voisinage immédiat d'une paire de rouleaux de sortie du film (33,34), côté de rembobinage (4), et qui, à l'état regroupé par pivotement, enserrent le noyau de la bobine de rembobinage (7) qui se trouve en position de travail et forment, pour l'extrémité avant du film, un canal de guidage (C) qui s'étend de la paire de rouleaux de sortie du film (33,34) jusqu'au noyau de la bobine de rembobinage (7).

13. Dispositif selon la revendication 12, caractérisé par le fait que le mouvement automatique des bras pivotants en forme de cuiller (29,30) et la rotation automatique du disque (10) portant les bobines de rembobinage (7,8) sont accordés l'un sur l'autre de façon que les bras pivotants (29,30) ne puissent pivoter qu'après achèvement de la rotation du disque (10).

14. Dispositif selon la revendication 12 ou 13, caractérisé par le fait que les bras pivotants en forme de cuiller (29,30) peuvent être mutuellement échangés dans leur disposition et que de ce fait le sens de bobinage du ruban de film (N) sur le noyau de la bobine de rembobinage (7) peut être choisi dans le sens horaire ou dans le sens antihoraire.

15. Dispositif selon l'une des revendications 11-14, caractérisé par le fait que pour chacune des bobines de rembobinage (7,8) est prévu un dispositif de maintien de l'extrémité du film (36,37) qui sont disposés sur le disque (10) situé du côté de rembobinage et sont conçus sous forme de bras pivotants, chargés par ressort, pouvant pivoter pour venir contre la bobine de rembobinage respectif (7 ou 8).

16. Dispositif selon l'une des revendications 11-15, caractérisé par le fait que le disque (10) situé du côté du rembobinage présente des organes de surveillance (40), de préférence des cellules photo-électriques, pour surveiller la présence de bobines de rembobinage (7,8) sur le disque (10).

17. Dispositif selon la revendication 15 ou 16, caractérisé par le fait qu'à la sortie du chemin (T) de transport du film est disposé, pour l'extrémité du film, un organe de détection (35) qui est relié d'une part avec un organe de commande pour les dispositifs de maintien de l'extrémité du film (36,37) et d'autre part avec des organes de commande pour les mécanismes d'entraînement du disque (10) situé du côté rembobinage et de l'organe d'enfilage du film (28).

18. Dispositif selon l'une des revendications précédentes, caractérisé par le fait que les bobines débitrices vides peuvent s'employer comme bobines de rembobinage.

19. Procédé de traitement d'originaux à tirer, regroupés par collage sous forme de ruban de films (N), dans une tireuse photographique (1) dans le cas laquelle le ruban de film négatif (N) est débobiné, au choix, de l'une de deux bobines débitrices (5,6) qui sont disposées à l'entrée (3) de la tireuse (1)et se trouvent sur des mandrins de bobine (51,61) et est transporté par des moyens de transport du film, le long d'un chemin (T) de transport du film, à travers la tireuse photographique (1), procédé dans lequel des originaux se trouvant sur le ruban de film (N) sont exposés, dans une station d'exposition (2), pour transfert sur un matériau de tirage photographique, de préférence sur du papier photographique (F) non exposé qui est transporté, à travers la station d'expositioii (2), le long d'un chemin (P) du papier courant à l'intérieur de la tireuse (1) et de préférence en dessous du chemin (T) de transport du film, et qui, après avoir parcouru la station d'exposition (2), est rembobiné au choix sur l'une de deux bobines de rembobinage (7,8) qui sont disposées du côté de la sortie (4) de la tireuse (1) et qui se trouvent sur des mandrins de bobine (71,81), caractérisé par le fait que la bobine débitrice (5) et la bobine de rembobinage (7) respectivement choisies pour le débobinage et le rembobinage se déplacent en une position de travail dans laquelle elles se trouvent au voisinage immédiat du chemin (T) de transport du film, étant précisé que les mandrins correspondants (51 ou 71) se trouvent à peu près sur le prolongement rectiligne du chemin (T) de transport du film, par le fait que la bobine débitrice (6) ou la bobine de rembobinage (8) respectivement maintenue en position d'attente est disposée sur le prolongement à peu près rectiligne du chemin (T) de transport du film, respectivement derrière la bobine débitrice ou la bobine de rembobinage (5,7) qui se trouve respectivement en position de travail, par le fait qu'en outre la bobine débitrice ou la bobine de rembobinage (5,7) qui se trouve respectivement en position de travail se déplace, de préférence automatiquement, en la position d'attente lorsque la bobine débitrice (5) est vide ou que la bobine de rembobinage (7) est pleine, étant précisé que la bobine débitrice (6) pleine qui se trouve en position d'attente et la seconde bobine de rembobinage (8) vide se déplacent en même temps en la position de travail et par le fait qu'en outre l'extrémité avant du film de la bobine débitrice (6) qui se trouve en position d'attente est automatiquement transférée, par un dispositif d'enfilage du film (13), à une paire de rouleaux d'enfilage du film (24, 25) qui se trouve à l'entrée du chemin (T) de transport du film.
